(19) **Europäisches Patentamt**
**European Patent Office**
**Office européen des brevets**

(11) **EP 4 274 342 B1**

(12) **EUROPEAN PATENT SPECIFICATION**

(45) Date of publication and mention
of the grant of the patent:
**08.04.2026  Bulletin 2026/15**

(21) Application number: **21923688.2**

(22) Date of filing: **03.02.2021**

(51) International Patent Classification (IPC):
***H04W 72/04*** (2023.01)   ***H04L 1/00*** (2006.01)
***H04L 5/00*** (2006.01)

(52) Cooperative Patent Classification (CPC):
**H04L 1/0011; H04L 1/0003; H04L 1/0005;**
**H04L 1/0007; H04L 1/0025;** H04L 1/0029;
H04L 5/0092

(86) International application number:
**PCT/CN2021/075003**

(87) International publication number:
**WO 2022/165660 (11.08.2022 Gazette 2022/32)**

(54) **METHOD AND DEVICE FOR TRANSMITTING DATA**

VERFAHREN UND VORRICHTUNG ZUR DATENÜBERTRAGUNG

PROCÉDÉ ET DISPOSITIF DE TRANSMISSION DE DONNÉES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**08.11.2023  Bulletin 2023/45**

(73) Proprietor: **Huawei Technologies Co., Ltd.**
**Shenzhen, Guangdong 518129 (CN)**

(72) Inventors:
• **YU, Jian**
  **Shenzhen, Guangdong 518129 (CN)**
• **LIU, Yunfeng**
  **Shenzhen, Guangdong 518129 (CN)**

• **YU, Yawei**
  **Shenzhen, Guangdong 518129 (CN)**
• **GUO, Zhiheng**
  **Shenzhen, Guangdong 518129 (CN)**

(74) Representative: **Grünecker Patent- und**
**Rechtsanwälte**
**PartG mbB**
**Leopoldstraße 4**
**80802 München (DE)**

(56) References cited:
**WO-A1-2019/142524      WO-A1-2020/197749**
**CN-A- 108 289 011      CN-A- 108 400 857**
**US-A1- 2019 373 486      US-A1- 2020 235 971**
**US-A1- 2021 022 082**

Description

## TECHNICAL FIELD

This application relates to the field of wireless communication, and in particular, to a data transmission method and apparatus.

## BACKGROUND

In a new radio (new radio, NR) system, data is transmitted in a unit of a radio frame (frame) on a wireless network. Duration of the radio frame is 10 milliseconds (ms), and one radio frame includes 10 subframes, that is, duration of one subframe is 1 ms. One subframe may include at least one slot. Based on data transmission directions, slots may be classified into an uplink (uplink, UL) slot, a downlink (downlink, DL) slot, and a special slot. The uplink slot includes an uplink symbol, and is used to transmit uplink data from a terminal device to a network device. The downlink slot includes a downlink symbol, and is used to transmit downlink data from the network device to the terminal device. The special slot can be used to transmit both the uplink data and the downlink data.

Generally, before the network device communicates with the terminal device, the network device configures, for to-be-transmitted data, configuration information required for transmitting the to-be-transmitted data, for example, a modulation and coding scheme (modulation and coding scheme, MCS). Subsequently, the to-be-transmitted data is transmitted between the network device and the terminal device based on the configuration information. The to-be-transmitted data may be transmitted in one slot, or may be transmitted across slots (transmitted in a plurality of slots). If the to-be-transmitted data is transmitted in one slot, the configuration information configured by the network device is used for the slot. If the to-be-transmitted data is transmitted across slots, the configuration information configured by the network device is used for a plurality of slots. As a result, data transmission quality deteriorates. US2019/373486 A1 relates to slot aggregation for uplink communications, with per-slot MCS, and TB splitting into different RVs per slot. US2020/235971 A1 relates to intra-packet/TB MCS switch, with transmission of MCS switch configuration by the base station, and multi-slot transmission. WO2020/19749 A1 relates to TBS determination, and CB segmentation for multi-slot TB transmission.

## SUMMARY

This application provides a data transmission method and apparatus. In a case of cross-slot data transmission, an MCS corresponding to each data block of to-be-transmitted data may be configured for the data block, to improve data transmission quality.

To achieve the foregoing objectives, the invention is defined by a method according to the subject-matter of claim 1, a method according to the subject-matter of claim 7, and an apparatus according to the subject-matter of claim 13. Preferred embodiments are defined by the subject-matter of the dependent claims.

According to a first aspect, an embodiment of this application provides a data transmission method. The method includes: A terminal device receives first information from a first network device, where the first information is used by the terminal device to determine to divide first data into at least two data blocks, the first data is to-be-transmitted data between the first network device and the terminal device, a quantity of slots occupied by the first data is greater than 1, and each of the at least two data blocks is mapped to a different time-domain position. The terminal device receives second information from the first network device, where the second information indicates at least two MCSs for transmitting the at least two data blocks, and the at least two MCSs are not all the same. The terminal device transmits the first data to the first network device based on the first information and the second information.

Based on the method provided in the first aspect, in a case of cross-slot transmission of the to-be-transmitted data between the terminal device and the first network device, the to-be-transmitted data may be divided to obtain the at least two data blocks, and the MCS corresponding to each data block is configured for the data block, to improve data transmission quality, for example, to improve data transmission efficiency and a throughput, and to reduce a bit error rate. In this case, the first network device sends scheduling information (for example, the second information) once to indicate related configuration information (for example, an MCS) corresponding to a plurality of slots occupied by the to-be-transmitted data, so that signaling overheads can be reduced. In addition, in the case of cross-slot transmission, a quantity of time-domain resources is increased. Compared with a case in which one transport block (transport block, TB) is transmitted in one slot, a larger TB is usually used for cross-slot transmission. This helps achieve more coding gains. Moreover, a quantity of frequency-domain resources can be reduced when the quantity of time-domain resources is increased, and at same total transmit power, transmit power on a subcarrier with a smaller quantity of frequency-domain resources is higher, indicating higher channel estimation performance. In the case of cross-slot transmission, joint channel estimation of a plurality of slots may be further combined, to improve channel estimation accuracy.

In a possible implementation, the method further includes: The terminal device obtains a transport block size (transport block size, TBS) corresponding to the first data, and performs code block (code block, CB) segmentation on a TB. Based on the foregoing method, the terminal device may perform CB segmentation on the TB based on the TBS corresponding to the first data. In this way, the terminal device may map bits to different CBs, perform channel coding on each CB, and then send the first data.

In a possible implementation, each of the at least two data blocks includes at least one CB, each data block includes a different CB, and the at least two data blocks are included in one TB. Alternatively, each of the at least two data blocks includes at least one TB, and each data block includes a different TB. Based on the foregoing method, the first data may be divided in two manners. In one division manner, the first data is divided based on the CB, and the first data is included in one TB. In the other division manner, the first data is divided based on the TB, and the first data may be included in different TBs. In this way, the first data can be flexibly divided based on a specific requirement.

In a possible implementation, the at least two data blocks are obtained through division in a unit of a slot. Alternatively, the at least two data blocks are obtained through division in a unit of a symbol in a slot. Based on the foregoing method, the first data may be divided based on different granularities (a slot or a symbol). Complexity of the terminal device and the first network device in a case in which division is performed based on a symbol is higher than that in a case in which division is performed based on a slot. During specific application, a division granularity may be determined as required.

According to the claimed embodiment, the first information includes information about a frame structure of a second network device, and transmission of the first data is interfered by data transmitted by the second network device. Alternatively, the first information includes first indication information and second indication information, the first indication information indicates a manner of dividing the first data, and the second indication information indicates a boundary between two adjacent data blocks in the first data. Based on the foregoing method, the terminal device determines, based on the information about the frame structure of the second network device or based on the first indication information and the second indication information, to divide the first data into the at least two data blocks.

In a possible implementation, the TBS corresponding to the first data is obtained based on a quantity $N_{\inf o}$ of bits of information that can be transmitted on a time-domain resource of a time-domain position corresponding to the first data and a frequency-domain resource of a frequency-domain position corresponding to the first data, where $N_{\inf o}$ satisfies the following formula:

$$N_{\inf o} = \sum_{m=1}^{M} N_{\inf o}(m)$$

, where $N_{\inf o}(m)$ is a quantity of bits of information that can be transmitted on a first time-frequency resource, the first time-frequency resource includes a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks. Based on the foregoing method, the quantity of bits of information that can be transmitted on the time-domain resource of the time-domain position corresponding to the first data and the frequency-domain resource of the frequency-domain position corresponding to the first data may be obtained, and then the TBS corresponding to the first data may be obtained based on the quantity of bits.

In a possible implementation, $N_{\inf o}(m)$ satisfies the following formula: $N_{\inf o}(m) = N_{RE}(m) \cdot R_m \cdot Q_m \cdot v$, where $N_{RE}(m)$ is a quantity of resource elements (resource elements, REs) in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data. Based on the foregoing method, the quantity of bits of information that can be transmitted on the first time-frequency resource may be obtained.

In a possible implementation, $N_{RE}(m)$ satisfies the following formula: $N_{RE}(m) = N'_{RE}(m) \bullet n_{PRB}$,

where $N'_{RE}(m)$ is a quantity of REs in a physical resource block (physical resource block, PRB) corresponding to the first time-frequency resource, and $n_{PRB}$ is a quantity of PRBs corresponding to the first time-frequency resource. Based on the foregoing method, the quantity of REs in the first time-frequency resource that are for transmitting the first data block may be obtained.

In a possible implementation, $N'_{RE}(m)$ satisfies the following formula:

$$N'_{RE}(m) = N_{sc}^{RB} \bullet N_{symb}^{sh}(m) - N_{DMRS}^{PRB}(m) - N_{oh}^{PRB}$$

, where $N_{sc}^{RB}$ is a quantity of subcarriers included in one PRB in frequency domain, $N_{symb}^{sh}(m)$ is a quantity of symbols included in the first time-frequency resource, $N_{DMRS}^{PRB}(m)$ is demodulation reference signal (demodulation reference signal, DMRS) overheads included in the first time-frequency resource, and $N_{oh}^{PRB}$ is higher-layer signaling overheads included in the first time-frequency resource. Based on the foregoing method, the quantity of REs in the PRB corresponding to the first time-frequency resource may be obtained.

In a possible implementation, a quantity of CBs included in the first data block satisfies the following formula: $C_m = \lceil B_m / (K_{cb} - L) \rceil$, where $K_{cb}$ is a maximum quantity of bits that can be included in one CB, $L$ is a cyclic redundancy check CRC length, and $B_m$ is

a quantity of bits of the first data block. Based on the foregoing method, a quantity of CBs that can be included in each data block may be determined.

In a possible implementation, if the first data block is a last data block in the at least two data blocks, $B_m$ satisfies the following formula:

$$B_M = B - \sum_{m=1}^{M-1} N_{\inf o}(m)$$

; or if the first data block is not a last data block in the at least two data blocks, $B_m$ satisfies the following formula: $B_M = N_{\inf o}(m)$, where $B$ is a sum of the TBS corresponding to the first data and a length of a CRC code. Based on the foregoing method, a quantity of CBs included in each data block may be obtained.

In a possible implementation, a TBS corresponding to a first TB is obtained based on a quantity $N_{\inf o}$ of bits of information that can be transmitted on a time-domain resource of a time-domain position corresponding to the first TB and a frequency-domain resource of a frequency-domain position corresponding to the first TB. The first TB is any TB in the first data. $N_{\inf o}$ satisfies the following formula: $N_{\inf o} = N_{RE} \cdot R_m \cdot Q_m \cdot v$, where $N_{RE}$ is a quantity of REs in a second time-frequency resource that are for transmitting the first TB, the second time-frequency resource includes the time-domain resource of the time-domain position corresponding to the first TB and the frequency-domain resource of the frequency-domain position corresponding to the first TB, $R_m$ is a bit rate corresponding to the second time-frequency resource, $Q_m$ is a modulation scheme corresponding to the second time-frequency resource, and $v$ is a quantity of layers or streams for transmitting the first data. Based on the foregoing method, the quantity of bits of information that can be transmitted on the time-domain resource of the time-domain position corresponding to the first TB and the frequency-domain resource of the frequency-domain position corresponding to the first TB may be obtained, and then the TBS corresponding to the first TB may be obtained based on the quantity of bits.

In a possible implementation, $N_{RE}(m)$ satisfies the following formula: $N_{RE} = N''_{RE} \bullet n_{PRB}$, where $N''_{RE}$ is a quantity of REs in a PRB corresponding to the second time-frequency resource, and $n_{PRB}$ is a quantity of PRBs corresponding to the second time-frequency resource. Based on the foregoing method, the quantity of REs in the second time-frequency resource that are for transmitting the first TB may be obtained.

In a possible implementation, $N''_{RE}$ satisfies the following formula:

$$N''_{RE} = N^{RB}_{sc} \bullet N^{sh}_{symb} - N^{PRB}_{DMRS} - N^{PRB}_{oh}$$

, where $N^{RB}_{sc}$ is a quantity of subcarriers included in one PRB in frequency domain, $N^{sh}_{symb}$ is a quantity of symbols included in the second time-frequency resource, $N^{PRB}_{DMRS}$ is DMRS overheads included in the second time-frequency resource, and $N^{PRB}_{oh}$ is higher-layer signaling overheads included in the second time-frequency resource. Based on the foregoing method, the quantity of REs in the PRB corresponding to the second time-frequency resource may be obtained.

In a possible implementation, if a sum of the TBS corresponding to the first TB and a length of a CRC code is less than or equal to the maximum quantity of bits that can be included in one CB, CB segmentation is not performed on the first TB; or if a sum of the TBS corresponding to the first TB and a length of a CRC code is greater than the maximum quantity of bits that can be included in one CB, CB segmentation is performed on the first TB. Based on the foregoing method, whether to perform CB segmentation on the first TB may be determined.

According to a second aspect, an embodiment of this application provides a data transmission method. The method includes: A first network device sends first information to a terminal device, where the first information is used by the terminal device to determine to divide first data into at least two data blocks, the first data is to-be-transmitted data between the first network device and the terminal device, a quantity of slots occupied by the first data is greater than 1, and each of the at least two data blocks is mapped to a different time-domain position. The first network device sends second information to the terminal device, where the second information indicates at least two MCSs for transmitting the at least two data blocks, and the at least two MCSs are not all the same. The first network device transmits the first data to the terminal device based on the first information and the second information.

Based on the method provided in the second aspect, in a case of cross-slot transmission of the to-be-transmitted data between the terminal device and the first network device, the to-be-transmitted data may be divided to obtain the at least two data blocks, and the MCS corresponding to each data block is configured for the data block, to improve data transmission quality, for example, to improve data transmission efficiency and a throughput, and to reduce a bit error rate. In this case, the first network device sends scheduling information (for example, the second information) once to indicate related configuration information (for example, an MCS) corresponding to a plurality of slots occupied by the to-be-transmitted data, so that signaling overheads can be reduced. In addition, in the case of cross-slot transmission, a quantity of time-domain resources is increased. Compared with a case in which one TB is transmitted in one slot, a larger TB is usually used for cross-slot transmission. This helps achieve more coding gains. Moreover, a quantity of frequency-domain resources can be reduced when the quantity of time-domain resources is increased, and at same total transmit power, transmit power on a subcarrier with a smaller quantity of frequency-domain resources is higher, indicating higher channel estimation performance. In the case of cross-slot transmission, joint channel estimation of a plurality of slots may be further combined, to improve channel estimation accuracy.

In a possible implementation, the method further includes: The first network device obtains a transport block size TBS corresponding to the first data, and performs code block CB segmentation on a transport block TB. Based on the foregoing method, the first network device may perform CB segmentation on the TB based on the TBS corresponding to the first data. In this way, the first network device may map bits to different CBs, perform channel coding on each CB, and then send the first data.

In a possible implementation, each of the at least two data blocks includes at least one CB, each data block includes a different CB, and the at least two data blocks are included in one TB. Alternatively, each of the at least two data blocks includes at least one TB, and each data block includes a different TB. Based on the foregoing method, the first data may be divided in two manners. In one division manner, the first data is divided based on the CB, and the first data is included in one TB. In the other division manner, the first data is divided based on the TB, and the first data may be included in different TBs. In this way, the first data can be flexibly divided based on a specific requirement.

In a possible implementation, the at least two data blocks are obtained through division in a unit of a slot. Alternatively, the at least two data blocks are obtained through division in a unit of a symbol in a slot. Based on the foregoing method, the first data may be divided based on different granularities (a slot or a symbol). Complexity of the terminal device and the first network device in a case in which division is performed based on a symbol is higher than that in a case in which division is performed based on a slot. During specific application, a division granularity may be determined as required.

According to the claimed embodiment, the first information includes information about a frame structure of a second network device, and transmission of the first data is interfered by data transmitted by the second network device. Alternatively, the first information includes first indication information and second indication information, the first indication information indicates a manner of dividing the first data, and the second indication information indicates a boundary between two adjacent data blocks in the first data. Based on the foregoing method, the first network device may send the information about the frame structure of the second network device to the terminal device, so that the terminal device determines, based on the information about the frame structure of the second network device, to divide the first data into the at least two data blocks. Alternatively, the first network device may send the first indication information and the second indication information to the terminal device, so that the terminal device determines, based on the first indication information and the second indication information, to divide the first data into the at least two data blocks.

In a possible implementation, the TBS corresponding to the first data is obtained based on a quantity $N_{\text{inf}\,o}$ of bits of information that can be transmitted by a time-domain resource of a time-domain position corresponding to the first data and a frequency-domain resource of a frequency-domain position corresponding to the first data, where $N_{\text{inf}\,o}$ satisfies the following formula:

$$N_{\text{inf}\,o} = \sum_{m=1}^{M} N_{\text{inf}\,o}(m)$$, where $N_{\text{inf}\,o}(m)$ is a quantity of bits of information that can be transmitted on a first time-frequency resource, the first time-frequency resource includes a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks. Based on the foregoing method, the quantity of bits of information that can be transmitted on the time-domain resource of the time-domain position corresponding to the first data and the frequency-domain resource of the frequency-domain position corresponding to the first data may be obtained, and then the TBS corresponding to the first data may be obtained based on the quantity of bits.

In a possible implementation, $N_{\text{inf}\,o}(m)$ satisfies the following formula: $N_{\text{inf}\,o}(m) = N_{RE}(m) \cdot R_m \cdot Q_m \cdot v$, where $N_{RE}(m)$ is a quantity of REs in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data. Based on the foregoing method, the quantity of bits of information that can be transmitted on the first time-frequency resource may be obtained.

In a possible implementation, $N_{RE}(m)$ satisfies the following formula: $$N_{RE}(m) = N'_{RE}(m) \bullet n_{PRB}$$,

where $N'_{RE}(m)$ is a quantity of REs in a PRB corresponding to the first time-frequency resource, and $n_{PRB}$ is a quantity of PRBs corresponding to the first time-frequency resource. Based on the foregoing method, the quantity of REs in the first time-frequency resource that are for transmitting the first data block may be obtained.

In a possible implementation, $N'_{RE}(m)$ satisfies the following formula:

$$N'_{RE}(m) = N_{sc}^{RB} \bullet N_{symb}^{sh}(m) - N_{DMRS}^{PRB}(m) - N_{oh}^{PRB}$$

, where $N_{sc}^{RB}$ is a quantity of subcarriers included in one PRB in frequency domain, $N_{symb}^{sh}(m)$ is a quantity of symbols included in the first time-frequency resource, $N_{DMRS}^{PRB}(m)$ is DMRS overheads included in the first time-frequency resource, and $N_{oh}^{PRB}$ is higher-layer signaling overheads included in the first time-frequency resource. Based on the foregoing method, the quantity of REs in the PRB corresponding to the first time-frequency resource may be obtained.

In a possible implementation, a quantity of CBs included in the first data block satisfies the following formula: $C_m = \lceil B_m / (K_{cb} - L) \rceil$, where $K_{cb}$ is a maximum quantity of bits that can be included in one CB, $L$ is a cyclic redundancy check CRC length, and $B_m$ is a quantity of bits of the first data block. Based on the foregoing method, a quantity of CBs that can be included in each data block may be determined.

In a possible implementation, if the first data block is a last data block in the at least two data blocks, $B_m$ satisfies the following formula:

$$B_M = B - \sum_{m=1}^{M-1} N_{\inf o}(m)$$

; or if the first data block is not a last data block in the at least two data blocks, $B_m$ satisfies the following formula: $B_M = N_{\inf o}(m)$, where $B$ is a sum of the TBS corresponding to the first data and a length of a CRC code. Based on the foregoing method, a quantity of CBs included in each data block may be obtained.

In a possible implementation, a TBS corresponding to a first TB is obtained based on a quantity $N_{\inf o}$ of bits of information that can be transmitted on a time-domain resource of a time-domain position corresponding to the first TB and a frequency-domain resource of a frequency-domain position corresponding to the first TB. The first TB is any TB in the first data. $N_{\inf o}$ satisfies the following formula: $N_{\inf o} = N_{RE} \cdot R_m \cdot Q_m \cdot v$, where $N_{RE}$ is a quantity of REs in a second time-frequency resource that are for transmitting the first TB, the second time-frequency resource includes the time-domain resource of the time-domain position corresponding to the first TB and the frequency-domain resource of the frequency-domain position corresponding to the first TB, $R_m$ is a bit rate corresponding to the second time-frequency resource, $Q_m$ is a modulation scheme corresponding to the second time-frequency resource, and $v$ is a quantity of layers or streams for transmitting the first data. Based on the foregoing method, the quantity of bits of information that can be transmitted on the time-domain resource of the time-domain position corresponding to the first TB and the frequency-domain resource of the frequency-domain position corresponding to the first TB may be obtained, and then the TBS corresponding to the first TB may be obtained based on the quantity of bits.

In a possible implementation, $N_{RE}(m)$ satisfies the following formula: $N_{RE} = N_{RE}'' \cdot n_{PRB}$, where $N_{RE}''$ is a quantity of REs in a PRB corresponding to the second time-frequency resource, and $n_{PRB}$ is a quantity of PRBs corresponding to the second time-frequency resource. Based on the foregoing method, the quantity of REs in the second time-frequency resource that are for transmitting the first TB may be obtained.

In a possible implementation, $N_{RE}''$ satisfies the following formula:

$$N_{RE}'' = N_{sc}^{RB} \cdot N_{symb}^{sh} - N_{DMRS}^{PRB} - N_{oh}^{PRB}$$

, where $N_{sc}^{RB}$ is a quantity of subcarriers included in one PRB in frequency domain, $N_{symb}^{sh}$ is a quantity of symbols included in the second time-frequency resource, $N_{DMRS}^{PRB}$ is DMRS overheads included in the second time-frequency resource, and $N_{oh}^{PRB}$ is higher-layer signaling overheads included in the second time-frequency resource. Based on the foregoing method, the quantity of REs in the PRB corresponding to the second time-frequency resource may be obtained.

In a possible implementation, if a sum of the TBS corresponding to the first TB and a length of a CRC code is less than or equal to the maximum quantity of bits that can be included in one CB, CB segmentation is not performed on the first TB; or if a sum of the TBS corresponding to the first TB and a length of a CRC code is greater than the maximum quantity of bits that can be included in one CB, CB segmentation is performed on the first TB. Based on the foregoing method, whether to perform CB segmentation on the first TB may be determined.

According to a third aspect, an embodiment of this application provides a communication apparatus, to implement the method according to any one of the first aspect or the possible implementations of the first aspect. The apparatus includes a corresponding unit or component configured to perform the foregoing method. The unit included in the apparatus may be implemented by software and/or hardware. The apparatus may be, for example, a terminal device, or a chip, a chip system, or a processor that supports the terminal device in implementing the foregoing method.

According to a fourth aspect, an embodiment of this application provides a communication apparatus, to implement the method according to any one of the second aspect or the possible implementations of the second aspect. The apparatus includes a corresponding unit or component configured to perform the foregoing method. The unit included in the apparatus may be implemented by software and/or hardware. The apparatus may be, for example, a first network device, or a chip, a chip system, or a processor that supports the first network device in implementing the foregoing method.

According to a fifth aspect, an embodiment of this application provides a communication apparatus, including: a processor. The processor is coupled to a memory, the memory is configured to store a program or instructions, and when the program or the instructions is/are executed by the processor, the apparatus is enabled to implement the method according to any one of the first aspect or the possible implementations of the first aspect.

According to a sixth aspect, an embodiment of this application provides a communication apparatus, including: a processor. The processor is coupled to a memory, the memory is configured to store a program or instructions, and when the program or the instructions is/are executed by the processor, the apparatus is enabled to implement the method according to any one of the second aspect or the possible implementations of the second aspect.

According to a seventh aspect, an embodiment of this application provides a communication apparatus. The apparatus is configured to implement the method according to any one of the first aspect or the possible implementations of the first aspect.

According to an eighth aspect, an embodiment of this application provides a communication apparatus. The apparatus is configured to implement the method according to any one of the second aspect or the possible implementations of the second aspect.

According to a ninth aspect, an embodiment of this application provides a computer-readable medium, storing a computer program or instructions. When the computer program or the instructions is/are executed, a computer is enabled to perform the method according to any one of the first aspect or the possible implementations of the first aspect.

According to a tenth aspect, an embodiment of this application provides a computer-readable medium, storing a computer program or instructions. When the computer program or the instructions is/are executed, a computer is enabled to perform the method according to any one of the second aspect or the possible implementations of the second aspect.

According to an eleventh aspect, an embodiment of this application provides a computer program product, including computer program code. When the computer program code is run on a computer, the computer is enabled to perform the method according to any one of the first aspect or the possible implementations of the first aspect.

According to a twelfth aspect, an embodiment of this application provides a computer program product, including computer program code. When the computer program code is run on a computer, the computer is enabled to perform the method according to any one of the second aspect or the possible implementations of the second aspect.

According to a thirteenth aspect, an embodiment of this application provides a chip, including: a processor. The processor is coupled to a memory, the memory is configured to store a program or instructions, and when the program or the instructions is/are executed by the processor, the chip is enabled to implement the method according to any one of the first aspect or the possible implementations of the first aspect.

According to a fourteenth aspect, an embodiment of this application provides a chip, including: a processor. The processor is coupled to a memory, the memory is configured to store a program or instructions, and when the program or the instructions is/are executed by the processor, the chip is enabled to implement the method according to any one of the second aspect or the possible implementations of the second aspect.

According to a fifteenth aspect, an embodiment of this application provides a communication system. The system includes the apparatus according to the third aspect and/or the apparatus according to the fourth aspect; or the system includes the apparatus according to the fifth aspect and/or the apparatus according to the sixth aspect; or the system includes the apparatus according to the seventh aspect and/or the apparatus according to the eighth aspect; or the system includes the computer-readable medium according to the ninth aspect and/or the tenth aspect; or the system includes the computer program product according to the eleventh aspect and/or the twelfth aspect; or the system includes the chip according to the thirteenth aspect and/or the fourteenth aspect.

It may be understood that any communication apparatus, chip, computer-readable medium, computer program product, communication system, or the like provided above is configured to perform the corresponding method provided above. Therefore, for beneficial effects that can be achieved by the communication apparatus, the chip, the computer-readable medium, the computer program product, the communication system, or the like, refer to beneficial effects in the corresponding method. Details are not described herein again.

**BRIEF DESCRIPTION OF DRAWINGS**

FIG. 1A is a schematic architectural diagram of a communication system according to an embodiment of this application;
FIG. 1B is a schematic diagram of cross-slot scheduling according to an embodiment of this application;
FIG. 2A is a schematic diagram 1 of frame structures of a network device 101 and a network device 102 according to an embodiment of this application;
FIG. 2B is a schematic diagram 2 of frame structures of a network device 101 and a network device 102 according to an embodiment of this application;
FIG. 2C is a schematic diagram 3 of frame structures of a network device 101 and a network device 102 according to an embodiment of this application;

FIG. 3A is a schematic diagram 1 of first data division according to an embodiment of this application;

FIG. 3B is a schematic diagram 2 of first data division according to an embodiment of this application;

FIG. 4 is a schematic diagram of a hardware structure of a communication apparatus according to an embodiment of this application;

FIG. 5 is a schematic flowchart 1 of a data transmission method according to an embodiment of this application;

FIG. 6 is a schematic flowchart 2 of a data transmission method according to an embodiment of this application;

FIG. 7 is a schematic structural diagram 1 of a communication apparatus according to an embodiment of this application; and

FIG. 8 is a schematic structural diagram 2 of a communication apparatus according to an embodiment of this application.

## DESCRIPTION OF EMBODIMENTS

The following describes implementations in embodiments of this application in detail with reference to the accompanying drawings.

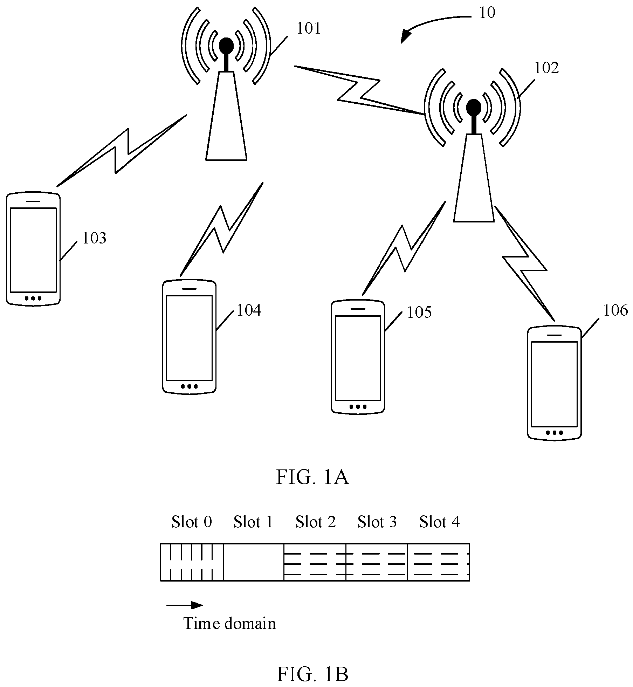

A method provided in embodiments of this application may be used in various communication systems. For example, the communication system may be a long term evolution (long term evolution, LTE) system, a fifth generation (5th generation, 5G) communication system, a wireless fidelity (wireless-fidelity, Wi-Fi) system, a 3rd Generation Partnership Project (3rd Generation Partnership Project, 3GPP) related communication system, a future evolved communication system, or a system in which a plurality of systems are converged. This is not limited. 5G may also be referred to as NR. The following uses a communication system 10 shown in FIG. 1A as an example to describe the method provided in embodiments of this application.

FIG. 1A is a schematic architectural diagram of the communication system 10 according to an embodiment of this application. In FIG. 1A, the communication system 10 may include a network device 101 and a network device 102, a terminal device 103 and a terminal device 104 that can communicate with the network device 101, and a terminal device 105 and a terminal device 106 that can communicate with the network device 102. The network device 101 and the network device 102 may also communicate with each other. FIG. 1A is merely a schematic diagram, and does not constitute a limitation on scenarios to which the technical solutions provided in this application are applicable.

In FIG. 1A, the network device 101 or the network device 102 may provide a radio access service for a terminal device. Specifically, each network device corresponds to a service coverage area. A terminal device that enters the area may communicate with the network device through a Uu interface, to receive the radio access service provided by the network device. Alternatively, the service coverage area may include one or more cells. For example, the network device 101 may provide the radio access service for the terminal device 103 and/or the terminal device 104, and the network device 102 may provide the radio access service for the terminal device 105 and/or the terminal device 106.

The network device in embodiments of this application, for example, the network device 101 or the network device 102, may be any device having a wireless transceiver function, including but not limited to: an evolved base station (NodeB or eNB or e-NodeB, evolved NodeB) in LTE, a base station (gNodeB or gNB) or a transmission reception point (transmission receiving point/transmission reception point, TRP) in NR, a base station that is subsequently evolved from 3GPP, an access node, a wireless relay node or a wireless backhaul node in a Wi-Fi system, or the like. The base station may be a macro base station, a micro base station, a pico base station, a small cell, a relay station, a balloon station, or the like. A plurality of base stations may support networks of a same technology mentioned above, or may support networks of different technologies mentioned above. In embodiments of this application, an apparatus configured to implement a function of a network device may be a network device, or may be an apparatus that supports the network device in implementing the function, for example, a chip system. The apparatus may be installed in the network device or used in combination with the network device. The following uses an example in which the network device is a base station for description. The plurality of network devices may be base stations of a same type, or may be base stations of different types. The base station may communicate with the terminal device, or may communicate with the terminal device by using a relay station. The terminal device may communicate with a plurality of base stations using different technologies. For example, the terminal device may communicate with a base station supporting an LTE network, or may communicate with a base station supporting a 5G network, or may support dual connections to a base station in an LTE network and a base station in a 5G network.

The terminal device in embodiments of this application, for example, the terminal device 103, the terminal device 104, the terminal device 105, or the terminal device 106, is a device having a wireless transceiver function. The terminal device may be deployed on land, including an indoor or outdoor device or a handheld or vehicle-mounted device. The terminal device may also be deployed on the water surface (for example, on a ship). The terminal device may also be deployed in the air (for example, on aircraft, balloons, and satellites). The terminal device may also be referred to as a terminal. The terminal device may be user equipment (user equipment, UE), and the UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus that supports the terminal device in implementing the function, for example, a chip system. The apparatus may be installed in the terminal device or used in combination with the terminal device. In embodiments of this application, the chip system may include a chip, or may include a chip and another discrete component. In the technical solutions provided in embodiments of this application, an example in which an apparatus configured to implement a function of a terminal device is a terminal device is used to describe the technical solutions provided in the embodiments of this application.

The communication system 10 shown in FIG. 1A is merely used as an example, but is not intended to limit the technical solutions of this application. A person skilled in the art should understand that in a specific implementation process, the communication system 10 may further include other devices, and a quantity of network devices and a quantity of terminals may be determined based on a specific requirement. This is not limited.

In FIG. 1A, before the network device communicates with the terminal device, the network device configures, for to-be-transmitted data, configuration information required for transmitting the to-be-transmitted data. Subsequently, the network device and the terminal device may transmit the to-be-transmitted data based on the configuration information. The to-be-transmitted data may be transmitted in one slot, or may be transmitted across slots (transmitted in a plurality of consecutive or non-consecutive slots). If the to-be-transmitted data is transmitted in one slot, the configuration information configured by the network device is used for the slot. If the to-be-transmitted data is transmitted across slots, the configuration information configured by the network device is used for a plurality of slots, that is, configuration information corresponding to each slot is the same. For example, in FIG. 1B, the network device sends the configuration information to the terminal device in a slot 0, and receives the to-be-transmitted data in a slot 2 to a slot 4, where the slot 2, the slot 3, and the slot 4 correspond to the same configuration information.

However, in a case of cross-slot data transmission, different slots are affected differently. For example, different slots are affected by different interference. The following three scenarios are used as examples below to describe interference to different slots. It may be understood that the following three scenarios are merely examples, and specific application may include but is not limited to the following three scenarios.

Scenario 1: In a process in which a plurality of network devices simultaneously receive data, mutual interference occurs.

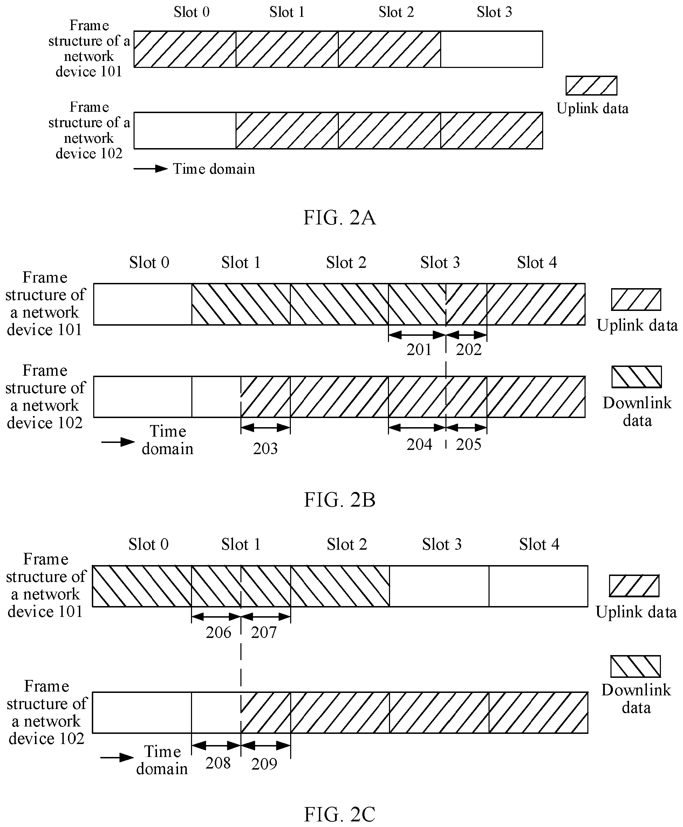

Using the communication system 10 shown in FIG. 1A as an example, the network device 101 and the network device 102 are macro base stations. The communication system 10 has an uplink-only frame structure. For example, frame structures used by the network device 101 and the network device 102 are shown in FIG. 2A. In FIG. 2A, slots 0 to slots 3 of the network device 101 and the network device 102 are all uplink slots. The network device 101 receives data from the terminal device 103 or the terminal device 104 in the slot 0 to the slot 2, and the network device 102 receives data from the terminal device 105 or the terminal device 106 in the slot 1 to the slot 3. The network device 102 does not transmit data in the slot 0. Therefore, a symbol in the slot 0 of the network device 101 is not interfered by the slot 0 of the network device 102. The network device 102 receives data in the slot 1 and the slot 2. Therefore, symbols in the slot 1 and the slot 2 of the network device 101 are interfered by the slot 1 and the slot 2 of the network device 102. Therefore, when the network device 101 receives data, the slot 0 to the slot 2 are affected by different interference. Similarly, because the network device 101 receives data in the slot 1 and the slot 2, symbols in the slot 1 and the slot 2 of the network device 102 are interfered by the slot 1 and the slot 2 of the network device 101; because the network device 101 does not transmit data in the slot 3, a symbol in the slot 3 of the network device 102 is not interfered by the slot 3 of the network device 101. Therefore, when the network device 102 receives data, the slot 1 to the slot 3 are affected by different interference.

Scenario 2: A frame structure of a macro base station and a frame structure of a micro base station are configured differently. That is, the frame structure of the macro base station is different from the frame structure of the micro base station. If the macro base station sends data to the terminal device in a process in which the micro base station receives data, data received by the micro base station is interfered by the macro base station.

Using the communication system 10 shown in FIG. 1A as an example, the network device 101 is a macro base station, and the network device 102 is a micro base station. Frame structures used by the network device 101 and the network device 102 are shown in FIG. 2B. In FIG. 2B, for the network device 101, a slot 0 to a slot 2 are downlink slots, a slot 3 is a special slot, and a slot 4 is an uplink slot. For the network device 102, a slot 0 is a downlink slot, a slot 1 is a special slot, and a slot 2 to a slot 4 are uplink slots. The network device 101 sends downlink data to the terminal device 103 or the terminal device 104 in the slot 1 and the slot 2 and on a symbol 201, and receives uplink data from the terminal device 103 or the terminal device 104 on a symbol 202 and in the slot 4. The network device 102 receives uplink data from the terminal device 105 or the terminal device 106 on a symbol 203 and in the slot 2 to the slot 4. Because the network device 101 transmits downlink data in the slot 1 and the slot 2 and on the symbol 201, the symbol 203, a symbol in the slot 2, and a symbol 204 of the network device 102 are interfered by the slot 1 and the slot 2 and the symbol 201 of the network device 101. However, because the network device 101 receives data on the symbol 202 and in the slot 4, a symbol 205 of the network device 102 and a symbol in the slot 4 are not interfered by the symbol 202 and the slot 4 of the network device 101. Therefore, when the network device 102 receives data, the slot 1 to the slot 4 are affected by different interference.

It may be understood that the micro base station has limited impact on the macro base station. Therefore, a case in which data received by the macro base station is interfered by the micro base station if the micro base station sends data to the terminal device in a process in which the macro base station receives data is not involved in the scenario 2. However, it should be understood that the method provided in embodiments of this application may also be applied to this scenario.

Scenario 3: A frame structure of a macro base station and a frame structure of a micro base station are configured differently. If a terminal device within coverage of the micro base station sends uplink data to the micro base station in a process in which a terminal device within coverage of the macro base station receives downlink data from the macro base station, data received by the terminal device within the coverage of the macro base station is interfered by the terminal device within the coverage of the micro base station.

Using the communication system 10 shown in FIG. 1A as an example, the network device 101 is a macro base station, and the network device 102 is a micro base station. Frame structures used by the network device 101 and the network device 102 are shown in FIG. 2C. In FIG. 2C, for the network device 101, a slot 0 to a slot 2 are downlink slots, and a slot 3 and a slot 4 are uplink slots. For the network device 102, a slot 0 is a downlink slot, a slot 1 is a special slot, and a slot 2 to a slot 4 are uplink slots. The network device 101 sends data to the terminal device 103 or the terminal device 104 in the slot 0 to the slot 2, and the network device 102 receives data from the terminal device 105 or the terminal device 106 on a symbol 208 and in the slot 2 to the slot 4. Because no data is transmitted in the slot 0 and on the symbol 208 of the network device 102, a symbol in the slot 0 and a symbol 206 of the network device 101 are not interfered by the slot 0 and the symbol 208 of the network device 102. However, because the network device 102 receives data on a symbol 209 and in the slot 2, a symbol 207 and a symbol in the slot 2 of the network device 101 are interfered by the symbol 209 and the slot 2 of the network device 102. Therefore, when the terminal device 103 or the terminal device 104 receives data, the slot 0 to the slot 2 are affected by different interference.

In conclusion, different slots are affected differently, and if configuration information corresponding to each slot is the same, data transmission quality deteriorates. For example, data transmission efficiency is low or a bit error rate of data is high. The foregoing scenario 1 is used as an example. A symbol in the slot 0 of the network device 101 is not interfered by the slot 0 of the network device 102, and a symbol in the slot 1 and the slot 2 of the network device 101 is interfered by the slot 1 and the slot 2 of the network device 102. Therefore, a signal to interference plus noise ratio (signal to interference plus noise ratio, SINR) in the slot 0 of the network device 101 is greater than a SINR in the slot 1 and the slot 2 of the network device 101. If an MCS is configured for the network device 101 based on the slot 0, the MCS is slightly high for the slot 1 and the slot 2 of the network device 101, resulting in a higher bit error rate in the slot 1 and the slot 2 of the network device 101. If an MCS is configured for the network device 101 based on the slot 1 and the slot 2, the MCS is slightly low for the slot 0 of the network device 101, resulting in lower transmission efficiency.

To resolve the problem of low data transmission quality, first data may be divided into at least two data blocks, where each data block corresponds to a different time-domain position, and sizes of the data blocks may be the same or may be different. The first data is to-be-transmitted data between the network device and the terminal device. In this way, the network device may configure, for different data blocks, configuration information corresponding to the data blocks, to improve data transmission quality.

It may be understood that the first data may be divided in different manners. In embodiments of this application, an example in which the first data is divided based on a code block (code block, CB) or a transport block (transport block, TB) is used for description. For details, refer to descriptions in the following manner 1 and manner 2. It should be understood that, during specific application, manners of dividing the first data include but are not limited to the two manners.

Manner 1: The first data is divided based on the CB.

In a possible implementation, each of the at least two data blocks includes at least one CB. Each data block includes a different CB. The at least two data blocks are included in one TB; in other words, the first data is included in one TB.

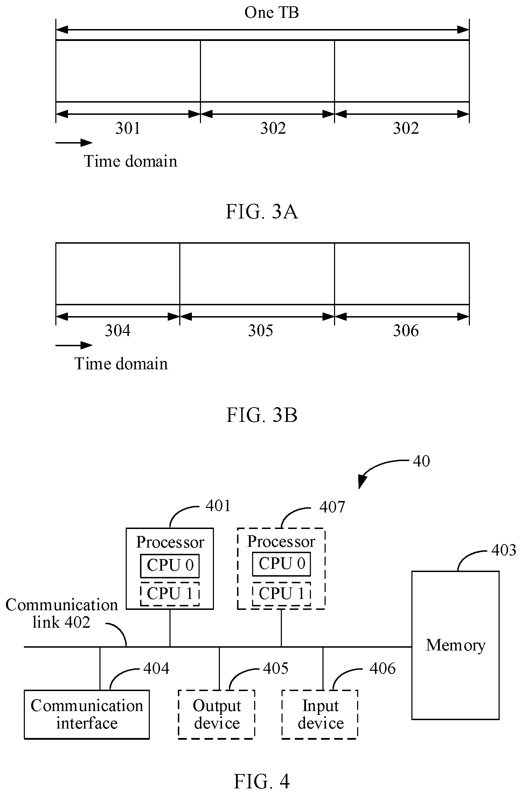

For example, FIG. 3A is a schematic diagram of division of the first data. In FIG. 3A, the first data is included in one TB, and the first data is divided into three data blocks: a data block 301 to a data block 303. The data block 301, the data block 302, and the data block 303 each include at least one CB. The data block 301, the data block 302, and the data block 303 include different CBs. For example, the TB includes m CBs. The data block 301 includes $CB_1$ to $CB_n$, the data block 302 includes $CB_{n+1}$ to $CB_p$, and the data block 303 includes $CB_{p+1}$ to $CB_m$, where $n<p<m$, and n, p, and m are all positive integers.

Manner 2: The first data is divided based on the TB.

In a possible implementation, each of the at least two data blocks includes at least one TB, and each data block includes a different TB.

For example, FIG. 3B is a schematic diagram of division of the first data. In FIG. 3B, the first data is divided into three data blocks: a data block 304 to a data block 306. The data block 304, the data block 305, and the data block 306 each include at least one TB. TBs included in the data block 304, the data block 305, and the data block 306 are different. For example, the data block 304 includes $TB_1$, the data block 305 includes $TB_2$, and the data block 306 includes $TB_3$. $TB_1$, $TB_2$ and $TB_3$ are different.

It may be understood that, in a process of dividing the first data based on the foregoing manner 1 or manner 2, division may be performed in a unit of a slot, or division may be performed in a unit of a symbol in a slot.

For example, the first data occupies a slot 1, a slot 2, and a slot 3, each slot includes 14 symbols, and the first data is divided into a data block 1 and a data block 2. The data block 1 may occupy the slot 1 and the slot 2, and the data block 2 may occupy the slot 3. Alternatively, the data block 1 may occupy the slot 1, and the data block 2 may occupy the slot 2 and the slot 3. Alternatively, the data block 1 may occupy the slot 1 and the first six symbols in the slot 2, and the data block 2 may occupy the last eight symbols in the slot 2 and the slot 3.

It may be understood that the first data in the foregoing manner 1 is included in one TB, and the first data in the foregoing manner 2 includes at least two TBs. A cyclic redundancy check (cyclic redundancy check, CRC) code needs to be added to each TB in a transmission process. Therefore, CRC overheads corresponding to the manner 1 are less than those corresponding to the manner 2. However, the manner 2 is easier to apply as smaller changes are made to existing standards in the manner 2. During specific application, whether the manner 1 or the manner 2 is used to divide the first data may be determined based on an actual requirement.

Optionally, each network element in FIG. 1A in embodiments of this application, for example, the network device 101, the network device 102, the terminal device 103, the terminal device 104, the terminal device 105, or the terminal device 106, may be a functional module in an apparatus. It may be understood that the functional module may be an element in a hardware device, for example, a communication chip or a communication component in a terminal device or a network device, or may be a software functional module run on hardware or a virtualized function instantiated on a platform (for example, a cloud platform).

For example, each network element in FIG. 1A may be implemented by using a communication apparatus 40 in FIG. 4. FIG. 4 is a schematic diagram of a hardware structure of a communication apparatus applicable to an embodiment of this application. The communication apparatus 40 includes at least one processor 401 and at least one communication interface 404, and is configured to implement the method provided in embodiments of this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control execution of solution programs of this application.

The communication line 402 may include a path, such as a bus, for transferring information between the components described above.

The communication interface 404 is configured to communicate with another device or a communication network. The communication interface 404 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 403 may be a read-only memory (read-only memory, ROM), or another type of static storage device that can store static information and instructions, or a random access memory (random access memory, RAM), or another type of dynamic storage device that can store information and instructions. Alternatively, the memory may be an electrically erasable programmable read-only memory (electrically erasable programmable read-only memory, EEPROM), or a compact disc read-only memory (compact disc read-only memory, CD-ROM), or another compact disc storage, an optical disc storage (including a compact disc, a laser disc, an optical disc, a digital versatile disc, a Blu-ray disc, or the like), or a magnetic disk storage medium or another magnetic storage device, or any other medium that can be used to carry or store expected program code in a form of an instruction or a data structure and that is accessible by a computer, but is not limited thereto. The memory may exist independently, and is coupled to the processor 401 through the communication line 402. Alternatively, the memory 403 may be integrated with the processor 401. The memory provided in embodiments of this application may be generally non-volatile. The memory 403 is configured to store computer-executable instructions for performing the solutions provided in embodiments of this application, and the processor 401 controls the execution. The processor 401 is configured to execute computer-executable instructions stored in the memory 403, to implement the method provided in embodiments of this application.

The computer-executable instruction in embodiments of this application may also be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the communication apparatus 40 may include a plurality of processors, for example, the processor 401 and a processor 407 in FIG. 4. Each of these processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in a plurality of manners. For example, the input device 406 may be a mouse, a keyboard, a touchscreen device, or a sensor device.

The foregoing communication apparatus 40 may be a general-purpose device or a dedicated device. A type of the communication apparatus 40 is not limited in embodiments of this application.

The following describes in detail a data transmission method provided in embodiments of this application with reference to FIG. 1A to FIG. 4.

It should be noted that in embodiments of this application, transmission may be understood as sending and/or receiving based on a specific context. The term "transmission" may be a noun or a verb. Transmission is often used to substitute sending and/or receiving when an execution body of an action is not emphasized. For example, the phrase "transmission of uplink data" may be understood from a perspective of a terminal device as sending uplink data, and may be understood from a perspective of a base station as receiving uplink data.

It should be noted that a name of a message between network elements or a name of each parameter in a message in the following embodiments of this application is merely an example. During specific implementation, another name may be used. This is not specifically limited in embodiments of this application.

It should be noted that in embodiments of this application, "/" may indicate that associated objects are in an "or" relationship. For example, A/B may indicate A or B. "And/or" may be used to indicate that there are three relationships between associated objects. For example, A and/or B may represent three cases: Only A exists, both A and B exist, and only B exists, where A and B may be singular or plural.

To facilitate description of the technical solutions in embodiments of this application, words such as "first" and "second" may be used to distinguish technical features with same or similar functions in embodiments of this application. The words "first" and "second" do not limit a quantity and an execution sequence, and the words "first" and "second" do not necessarily limit a difference. In embodiments of this application, words such as "example" or "for example" indicate an example, an illustration, or a description. Any embodiment or design scheme described with "an example" or "for example" should not be construed as being more preferred or advantageous than other embodiments or design schemes. The use of such words as "example" or "for example" is intended to present related concepts in a concrete manner for ease of understanding.

It should be noted that in embodiments of this application, "first", "second", "third", "A", "B", "C", "D", and the like are used for distinguishing between technical features described by them. There is no sequence or size order among the technical features described by the "first", "second", "third", "A", "B", "C", and "D".

It may be understood that in embodiments of this application, a same step or a step or a technical feature having a same function may be mutually referenced in different embodiments.

It may be understood that in embodiments of this application, a first network device and/or a terminal device may perform some or all of steps in embodiments of this application. These steps are merely examples. In embodiments of this application, other steps or variations of various steps may be further performed. In addition, the steps may be performed in sequences different from those presented in embodiments of this application, and not all the steps in embodiments of this application may need to be performed.

In embodiments of this application, a specific structure of an execution body of the data transmission method is not particularly limited in embodiments of this application, provided that the method provided in embodiments of this application can be implemented. For example, the data transmission method provided in embodiments of this application may be performed by the first network device, or a component used for the first network device, for example, a chip. This is not limited in this application. Alternatively, the data transmission method provided in embodiments of this application may be performed by the terminal device, or a component used for the terminal device, for example, a chip. This is not limited in this application. In the following embodiments, examples in which the first network device and the terminal device separately perform the data transmission method are used for description.

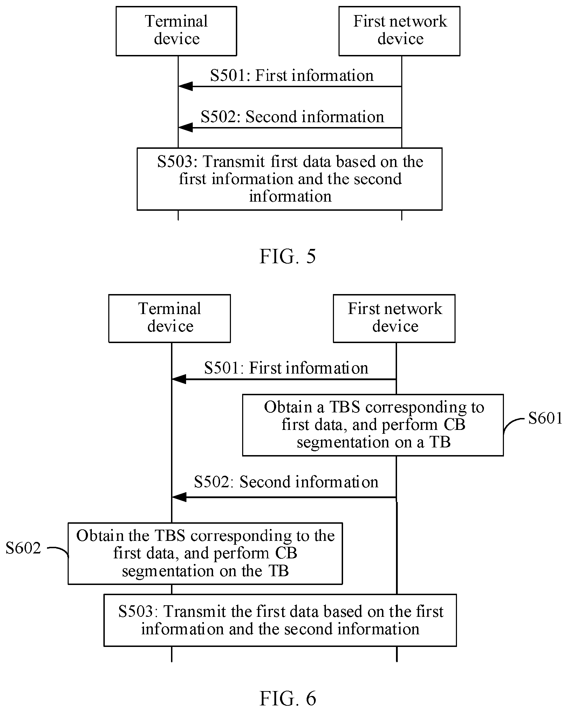

FIG. 5 shows a data transmission method according to an embodiment of this application. The data transmission method includes S501 to S503.

S501: A first network device sends first information to a terminal device.

The first network device may be the network device 101 or the network device 102 in FIG. 1A. If the first network device is the network device 101 in FIG. 1A, the terminal device may be the terminal device 103 and/or the terminal device 104 in FIG. 1A. If the first network device is the network device 102 in FIG. 1A, the terminal device may be the terminal device 105 and/or the terminal device 106 in FIG. 1A.

The foregoing three scenarios are used as examples. In the scenario 1, the first network device is the network device 101, and the terminal device is the terminal device 103 and/or the terminal device 104; or the first network device is the network device 102, and the terminal device is the terminal device 105 and/or the terminal device 106. In the scenario 2, the first network device is the network device 102, and the terminal device is the terminal device 105 and/or the terminal device 106. In the scenario 3, the first network device is the network device 101, and the terminal device is the terminal device 103 and/or the terminal device 104.

In this embodiment of this application, the first information may be used by the terminal device to determine to divide first data into at least two data blocks. The first data is to-be-transmitted data between the first network device and the terminal device, and a quantity of slots occupied by the first data is greater than 1, that is, the first data is transmitted across slots. A size of each data block may be the same or may be different. In this embodiment of this application, one slot may include a plurality of time-domain symbols. For example, one slot may include two symbols, seven symbols, or 14 symbols. In this embodiment of this application, the time-domain symbol may be an orthogonal frequency division modulation (orthogonal frequency division modulation, OFDM) symbol.

It may be understood that the first data may be divided into the at least two data blocks, and each data block is mapped to a different time-domain position, that is, each data block corresponds to a different time-domain position. In this way, the first network device may configure, for each data block, configuration information suitable for the data block, for example, an MCS, so that data transmission quality can be improved. It should be understood that, in addition to the MCS, the configuration information may further include other information such as uplink precoding, a frequency-domain resource allocation indication, and a time-domain resource allocation indication. Different data blocks may correspond to same or different configuration information. For descriptions of manners of dividing the first data, refer to the foregoing descriptions in embodiments shown in FIG. 1. Details are not described herein again.

The following describes content of the first information in detail. The content of the first information includes but is not limited to the following two cases.

Case 1: The first information includes first indication information and second indication information.

The first indication information indicates the manner of dividing the first data. The second indication information indicates a boundary between two adjacent data blocks in the first data.

In a possible implementation, the first indication information includes one bit. For example, if a value of the bit is "0", the first indication information indicates not to divide the first data; or if a value of the bit is "1", the first indication information indicates to divide the first data in the foregoing manner 1 or manner 2; and vice versa.

In another possible implementation, the first indication information includes two bits. For example, if a value of the two bits is "00", the first indication information indicates not to divide the first data; if a value of the two bits is "01", the first indication information indicates to divide the first data in the foregoing manner 1; or if a value of the two bits is "10", the first indication information indicates to divide the first data in the foregoing manner 2.

In a possible implementation, the second indication information includes an identifier of a slot. For example, if the first data is transmitted in a slot 0 to a slot 2, the first data is divided into a data block 1 and a data block 2, and the second indication information includes an identifier of the slot 1, the second indication information indicates that a boundary between the data block 1 and the data block 2 is a last symbol in the slot 1 or a first symbol in the slot 1. If the second indication information indicates that the boundary between the data block 1 and the data block 2 is the last symbol in the slot 1, the data block 1 may be mapped to the slot 0 and the slot 1, and the data block 2 may be mapped to the slot 2. If the second indication information indicates that the boundary between the data block 1 and the data block 2 is the first symbol in the slot 1, the data block 1 may be mapped to the slot 0, and the data block 2 may be mapped to the slot 1 and the slot 2.

It may be understood that the identifier of the slot included in the second indication information may be an index of the slot in a radio frame, or may be an index of the slot in a segment of periodically repeated consecutive slots. For example, if a subcarrier spacing is 30 kHz, a 10 ms radio frame includes 20 slots, and the identifier of the slot included in the second indication information may be an index of the slot in the 20 slots. For another example, if the segment of periodically repeated consecutive slots includes five slots, the identifier of the slot included in the second indication information may be an index of the slot in the five slots.

Further, if the first data is divided in a unit of a symbol in a slot, the second indication information further includes an identifier of a symbol. The identifier of the symbol may be an index of the symbol in a slot indicated by the second indication information. The symbol may be an OFDM symbol.

For example, if the first data is transmitted in a slot 0 to a slot 2, the first data is divided into a data block 1 and a data block 2, the second indication information includes an identifier of the slot 1 and a symbol index k, k is an integer greater than or equal to 0 and less than or equal to N, and N is a total quantity of symbols in one slot, the second indication information indicates that a boundary between the data block 1 and the data block 2 is a symbol whose symbol index is k in the slot 1. To be specific, the data block 1 may be mapped to symbols whose symbol indexes are 0 to k in the slot 0 and the slot 1, and the data block 2 may be mapped to symbols whose symbol indexes are k+1 to N in the slot 1 and the slot 2. Alternatively, the data block 1 may be mapped to symbols whose symbol indexes are 0 to k-1 in the slot 0 and the slot 1, and the data block 2 may be mapped to symbols whose symbol indexes are k to N in the slot 1 and the slot 2.

According to the claimed embodiment, the second indication information is determined based on a frame structure of the first network device and a frame structure of a second network device, and transmission of the first data is interfered by data transmitted by the second network device. Therefore, before S501, the first network device may receive, from the second network device, information that indicates the frame structure of the second network device. The information indicating the frame structure of the second network device may be included in a reference signal or system information. If the first network device is the network device 101 in FIG. 1A, the second network device may be the network device 102 in FIG. 1A. If the first network device is the network device 102 in FIG. 1A, the second network device may be the network device 101 in FIG. 1A.

Further, in the first data, time-domain resources corresponding to the two adjacent data blocks are affected by different interference. In other words, the first network device may determine a boundary between the two adjacent data blocks in the first data based on magnitude of interference to a time-domain resource for transmitting the first data.

For example, in the foregoing scenario 1, if the first network device is the network device 101, the first data may be divided into a data block 1 and a data block 2, and a boundary between the data block 1 and the data block 2 is a last symbol in the slot 0. In other words, the data block 1 is mapped to the slot 0 of the network device 101, and the data block 2 is mapped to the slot 1 and the slot 2 of the network device 101. If the first network device is the network device 102, the first data may be divided into a data block 1 and a data block 2, and a boundary between the data block 1 and the data block 2 is a last symbol in the slot 1. In other words, the data block 1 is mapped to the slot 1 and the slot 2 of the network device 102, and the data block 2 is mapped to the slot 3 of the network device 102.

For example, in the foregoing scenario 2, the first network device is the network device 102, the first data is divided into a data block 1 and a data block 2, and a boundary between the data block 1 and the data block 2 is a last symbol in the symbol 204, or a boundary between the data block 1 and the data block 2 is a last symbol in the slot 2, or a boundary between the data block 1 and the data block 2 is a last symbol in the slot 3. If the boundary between the data block 1 and the data block 2 is the last symbol in the symbol 204, the data block 1 is mapped to the symbol 203, the slot 2, and the symbol 204 of the network device 102, and the data block 2 is mapped to the symbol 205 and the slot 4 of the network device 102. If the boundary between the data block 1 and the data block 2 is the last symbol in the slot 2, the data block 1 is mapped to the symbol 203 and the slot 2 of the network device 102, and the data block 2 is mapped to the slot 3 and the slot 4 of the network device 102.

For example, in the foregoing scenario 3, if the first network device is the network device 101, the first data is divided into a data block 1 and a data block 2, and a boundary between the data block 1 and the data block 2 is a last symbol in the symbol 206, or a boundary between the data block 1 and the data block 2 is a last symbol in the slot 0, or a boundary between the data block 1 and the data block 2 is a last symbol in the slot 1. If the boundary between the data block 1 and the data block 2 is the last symbol in the symbol 206, the data block 1 is mapped to the slot 0 and the symbol 206 of the network device 101, and the data block 2 is mapped to the symbol 207 and the slot 2 of the network device 101. If the boundary between the data block 1 and the data block 2 is the last symbol in the slot 0, the data block 1 is mapped to the slot 0 of the network device 101, and the data block 2 is mapped to the slot 1 and the slot 2 of the network device 101. If the boundary between the data block 1 and the data block 2 is the last symbol in the slot 1, the data block 1 is mapped to the slot 0 and the slot 1 of the network device 101, and the data block 2 is mapped to the slot 2 of the network device 101.

Case 2, which is the claimed embodiment: The first information includes information about a frame structure of a second network device.

The information about the frame structure of the second network device indicates the frame structure of the second network device. In this way, after receiving the first information, the terminal device may determine the frame structure of the second network device based on the first information, and determine, based on the frame structure of the second network device and a frame structure of the first network device, to divide the first data into the at least two data blocks. In this case, transmission of the first data is interfered by data transmitted by the second network device. A boundary between two adjacent data blocks in the first data may be determined based on impact of interference to a time-domain resource used to for transmitting the first data. For details, refer to the foregoing descriptions in the case 1.

In a possible implementation, the first information further includes first indication information. For descriptions of the first indication information, refer to the foregoing descriptions in the case 1. Further, the first information further includes third indication information. The third indication information may indicate a ratio of an uplink transmission symbol to a downlink transmission symbol in a special slot in the frame structure of the second network device. The uplink transmission symbol may also be referred to as an uplink symbol, and is used to transmit uplink data. The downlink transmission symbol may also be referred to as a downlink symbol, and is used to transmit downlink data. For example, the special slot includes 14 symbols, and the 14 symbols include an uplink transmission symbol, a downlink transmission symbol, and a guard period (Guard period, GP) symbol. If a GP includes two symbols, the ratio of the uplink transmission symbol to the downlink transmission symbol is 1:1. In this case, six symbols in the special slot may be used to transmit uplink data, and six symbols may be used to transmit downlink data. It may be understood that the first indication information may not be included in the first information, but is included in the following second information. For descriptions of the second information, refer to the descriptions in S502. If neither the first information nor the second information includes the first indication information, the terminal device may determine that all data blocks in the first data are transmitted by using a same MCS.

It may be understood that the information about the frame structure of the second network device may be sent by the first network device, or may be sent by the second network device. For example, the information about the frame structure of the second network device may be included in system information sent by the second network device. In this case, the first information may not include the information about the frame structure of the second network device.

In a possible implementation, the first information is included in higher-layer signaling, for example, radio resource control (radio resource control, RRC) signaling.

Correspondingly, the terminal device receives the first information from the first network device.

In a possible implementation, after receiving the first information, the terminal device determines the boundary between the two adjacent data blocks in the first data based on the first information. Further, the terminal device may further determine, based on the first information, the manner of dividing the first data.

In the foregoing case 1, the terminal device determines, based on the first indication information, the manner of dividing the first data, and determines the boundary between the two adjacent data blocks in the first data based on the second indication information.

For example, if the first indication information indicates to divide the first data in the manner 1, and the second indication information includes the identifier of the slot 1, the terminal device determines that the manner of dividing the first data is the manner 1, and the first data is divided into a data block 1 and a data block 2. The data block 1 and the data block 2 each include at least one CB, the data block 1 and the data block 2 include different CBs, and a boundary between the data block 1 and the data block 2 is the last symbol in the slot 1 or the first symbol in the slot 1.

For example, if the first indication information indicates to divide the first data in the manner 2, the second indication information includes the identifier of the slot 1 and the symbol index k, k is an integer greater than or equal to 0 and less than or equal to N, and N is the total quantity of symbols in one slot, the terminal device determines that the manner of dividing the first data is the manner 2, and the first data is divided into the data block 1 and the data block 2. The data block 1 and the data block 2 each include at least one TB, the data block 1 and the data block 2 include different TBs, and the boundary between the data block 1 and the data block 2 is the symbol whose symbol index is k in the slot 1.

In the foregoing case 2, the terminal device determines the boundary between the two adjacent data blocks in the first data based on the frame structure of the first network device and the frame structure of the second network device. If the first information includes the first indication information, the terminal device determines, based on the first indication information, the manner of dividing the first data.

It may be understood that the process in which the terminal device determines the boundary between the two adjacent data blocks in the first data based on the frame structure of the first network device and the frame structure of the second network device is similar to the process in which the first network device determines the boundary. Therefore, for the process in which the terminal device determines the boundary between the two adjacent data blocks in the first data based on the frame structure of the first network device and the frame structure of the second network device, refer to the foregoing descriptions of the process in which the first network device determines the boundary in S501.

Further, the terminal device may further determine the ratio of the uplink symbol to the downlink symbol in the special slot in the frame structure of the second network device based on the third indication information. It may be understood that, after determining the ratio, the terminal device may divide the first data in a unit of a symbol in a slot.

S502: The first network device sends the second information to the terminal device.

In this embodiment of this application, the second information may indicate at least two MCSs for transmitting the at least two data blocks. It may be understood that each data block may correspond to one MCS, and each data block may correspond to a same or different MCS. In other words, one MCS may correspond to one or more data blocks.

In a possible implementation, the second information includes an identifier of an MCS for transmitting each data block. The identifier of the MCS may be an index of the MCS in an MCS table.

For example, the first data is divided into a data block 1, a data block 2, and a data block 3. If an MCS for transmitting the data block 1 is $MCS_1$, an MCS for transmitting the data block 2 is $MCS_2$, and an MCS for transmitting the data block 3 is $MCS_3$, the second information includes $MCS_1$, $MCS_2$, and $MCS_3$.

In another possible implementation, the second information includes an index of an MCS for transmitting a first data block, and a first offset. The first offset includes an offset between an index of an MCS for transmitting each data block after the first data block and the index of the MCS for transmitting the first data block.

For example, the first data is divided into a data block 1, a data block 2, and a data block 3. If an MCS for transmitting the data block 1 is transmitted $MCS_1$, an MCS for transmitting the data block 2 is $MCS_3$, and an MCS for transmitting the data block 3 is $MCS_5$, the second information includes $MCS_1$, $MCS_2$, and $MCS_4$.

It may be understood that, for the manner 2, one codeword may include one or more TBs. The second information may indicate an MCS corresponding to each TB. For example, if the first data is divided into two data blocks, and the two data blocks are sent by using one codeword, the second indication information indicates an MCS corresponding to each TB. For another example, if the first data is divided into two data blocks, and the two data blocks are sent by using two codewords, the second indication information indicates an MCS corresponding to each TB in a first codeword, and the second indication information further indicates an MCS corresponding to each TB in a second codeword.

In a possible implementation, an MCS corresponding to a data block that is not interfered by the second network device is higher than an MCS corresponding to a data block that is interfered by the second network device. Alternatively, an MCS corresponding to a data block that is subject to weak interference from the second network device is higher than an MCS corresponding to a data block that is subject to strong interference from the second network device.

Using the foregoing scenario 2 as an example, an MCS corresponding to a data block transmitted on the symbol 205 and the symbol in the slot 4 of the network device 102 is higher than an MCS corresponding to a data block transmitted on the symbol 203, the symbol in the slot 2, and the symbol 204 of the network device 102.

In a possible implementation, the second information further indicates the time-domain resource for transmitting the first data. For example, the second information further includes a position of a start symbol of the time-domain resource and a symbol length occupied by the first data. In this way, after receiving the second information, the terminal device may determine the time-domain resource for the first data based on the second information. It may be understood that the second information may further include other information such as a frequency-domain resource allocation indication, a time-domain resource allocation indication, and uplink precoding. This is not limited.

In a possible implementation, the second information is included in downlink control information (downlink control information, DCI).

It may be understood that a sequence of performing S501 and S502 is not limited in this embodiment of this application. S501 may be performed before S502, or S501 may be performed after S502, or S501 and S502 may be performed simultaneously.

Correspondingly, the terminal device receives the second information from the first network device.

In a possible implementation, after receiving the second information, the terminal device determines, based on the second information, the MCS used by each of the at least two data blocks.

For example, the first data is divided into a data block 1, a data block 2, and a data block 3. If the second information includes $MCS_1$, $MCS_2$, and $MCS_3$, the terminal device determines that an MCS for transmitting the data block 1 is $MCS_1$, an MCS for transmitting the data block 2 is $MCS_2$, and an MCS for transmitting the data block 3 is $MCS_3$.

For example, the first data is divided into a data block 1, a data block 2, and a data block 3. If the second information includes $MCS_1$, $MCS_2$, and $MCS_4$, the terminal device determines that an MCS for transmitting the data block 1 is $MCS_1$, an MCS for transmitting the data block 2 is $MCS_3$, and an MCS for transmitting the data block 3 is $MCS_5$.

S503: The terminal device transmits the first data to the first network device based on the first information and the second information.

In a possible implementation, the terminal device sends the at least two data blocks to the first network device, and the MCSs used by the at least two data blocks are indicated in the second information. The at least two data blocks may be carried on a physical uplink shared channel (physical uplink shared channel, PUSCH).

It may be understood that if the second information further indicates other information, for example, the time-domain resource and/or the uplink precoding for transmitting the first data, the terminal device may further process the at least two data blocks based on the information, and send the processed data blocks to the first network device.

Correspondingly, the first network device receives the first data based on the first information and the second information.

Based on the method shown in FIG. 5, in a case of cross-slot transmission of the to-be-transmitted data between the terminal device and the first network device, the to-be-transmitted data may be divided to obtain the at least two data blocks, and the MCS corresponding to each data block is configured for the data block, to improve data transmission quality, for example, to improve the data transmission efficiency and a throughput, and to reduce a bit error rate. In this case, the first network device sends scheduling information (for example, the second information) once to indicate related configuration information (for example, an MCS, a time-frequency resource, and uplink precoding) corresponding to a plurality of slots occupied by the to-be-transmitted data, so that signaling overheads can be reduced. In addition, in the case of cross-slot transmission, a quantity of time-domain resources is increased. Compared with a case in which one TB is transmitted in one slot, a larger TB is usually used for cross-slot transmission. This helps achieve more coding gains. Moreover, a quantity of frequency-domain resources can be reduced when the quantity of time-domain resources is increased, and at same total transmit power, transmit power on a subcarrier with a smaller quantity of frequency-domain resources is higher, indicating higher channel estimation performance. In the case of cross-slot transmission, joint channel estimation of a plurality of slots may be further combined, to improve channel estimation accuracy.

The actions of the first network device or the terminal device in S501 to S503 may be performed by the processor 401 in the communication apparatus 40 shown in FIG. 4 by invoking the application program code stored in the memory 403. This is not limited in this embodiment of this application.

It may be understood that, before S503, the first network device and the terminal device may obtain a transport block size (transport block size, TBS) corresponding to the first data, and perform CB segmentation on a TB. For example, the first network device may obtain, between S501 and S502, the TBS corresponding to the first data, and perform CB segmentation on the TB. The terminal device may obtain, between S502 and S503, the TBS corresponding to the first data, and perform CB segmentation on the TB.

As shown in FIG. 6, in a possible implementation of the method shown in FIG. 5, the method shown in FIG. 5 further includes S601 and S602.

S601: The first network device obtains the TBS corresponding to the first data, and performs CB segmentation on the TB.

For the foregoing manner 1, the TBS corresponding to the first data is obtained based on a quantity of bits of information that can be transmitted on a time-domain resource of a time-domain position corresponding to the first data and a frequency-domain resource of a frequency-domain position corresponding to the first data. The quantity $N_{\inf o}$ of bits of information that can be transmitted on the time-domain resource of the time-domain position corresponding to the first data and the frequency-domain resource of the frequency-domain position corresponding to the first data satisfies the following formula: $N_{\inf o} = \sum_{m=1}^{M} N_{\inf o}(m)$, where $N_{\inf o}(m)$ is a quantity of bits of information that can be transmitted on a first time-frequency resource, the first time-frequency resource includes a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks.

Further, $N_{\inf o}(m)$ satisfies the following formula: $N_{\inf o}(m) = N_{RE}(m) \cdot R_m \cdot Q_m \cdot v$, where $N_{RE}(m)$ is a quantity of resource elements (resource elements, REs) in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data.

Further, $N_{RE}(m)$ satisfies the following formula:

$$N_{RE}(m) = N'_{RE}(m) \bullet n_{PRB}$$ , where $N'_{RE}(m)$ is a quantity of REs in a physical resource block (physical resource block, PRB) corresponding to the first time-frequency resource, and $n_{PRB}$ is a quantity of PRBs corresponding to the first time-frequency resource.

Further, $N'_{RE}(m)$ satisfies the following formula:

$$N'_{RE}(m) = N_{sc}^{RB} \bullet N_{symb}^{sh}(m) - N_{DMRS}^{PRB}(m) - N_{oh}^{PRB}$$

, where $N_{sc}^{RB}$ is a quantity of subcarriers included in one PRB in frequency domain, $N_{symb}^{sh}(m)$ is a quantity of symbols included in the first time-frequency resource, $N_{DMRS}^{PRB}(m)$ is demodulation reference signal (demodulation reference signal, DMRS) overheads included in the first time-frequency resource, and $N_{oh}^{PRB}$ is higher-layer signaling overheads included in the first time-frequency resource.

It may be understood that, in the foregoing manner 1, after obtaining the TBS corresponding to the first data, the first network device may perform CB segmentation on the first data based on the TBS corresponding to the first data.

In a possible implementation, a quantity of CBs included in the first data block satisfies the following formula: $C_m = \lceil B_m / (K_{cb} - L) \rceil$, where $K_{cb}$ is a maximum quantity of bits that can be included in one CB, $L$ is a cyclic redundancy check (cyclic redundancy check, CRC) length, and $B_m$ is a quantity of bits of the first data block.

Further, if the first data block is a last data block in the at least two data blocks, $B_m$ satisfies the following

formula: $B_M = B - \sum_{m=1}^{M-1} N_{\inf o}(m)$ ; or if the first data block is not a last data block in the at least two data blocks, $B_m$ satisfies the following formula: $B_M = N_{\inf o}(m)$, where $B$ is a sum of the TBS corresponding to the first data and a length of a CRC code.

For the foregoing manner 2, the first network device may obtain a TBS corresponding to each TB in the first data. Subsequently, the first network device may perform CB segmentation on each TB based on the TBS of the TB. First, any TB in the first data, that is, a first TB, is used as an example to describe a process in which the first network device obtains a TBS corresponding to the first TB.

In a possible implementation, the TBS corresponding to the first TB is obtained based on a quantity of bits of information that can be transmitted on a time-domain resource of a time-domain position corresponding to the first TB and a frequency-domain resource of a frequency-domain position corresponding to the first TB. The quantity $N_{\inf o}$ of bits of information that can be transmitted on the time-domain resource of the time-domain position corresponding to the first TB and the frequency-domain resource of the frequency-domain position corresponding to the first TB satisfies the following formula: $N_{\inf o} = N_{RE} \cdot R_m \cdot Q_m \cdot v$, where $N_{RE}$ is a quantity of REs in a second time-frequency resource that are for transmitting the first TB, the second time-frequency resource includes the time-domain resource of the time-domain position corresponding to the first TB and the frequency-domain resource of the frequency-domain position corresponding to the first TB, $R_m$ is a bit rate corresponding to the second time-frequency resource, $Q_m$ is a modulation scheme corresponding to the second time-frequency resource, and $v$ is a quantity of layers or streams for transmitting the first data.

Further, $N_{RE}(m)$ satisfies the following formula: $N_{RE} = N''_{RE} \cdot n_{PRB}$ , where $N''_{RE}$ is a quantity of REs in a PRB corresponding to the second time-frequency resource, and $n_{PRB}$ is a quantity of PRBs corresponding to the second time-frequency resource.

Further, $N''_{RE}$ satisfies the following formula: $N''_{RE} = N^{RB}_{sc} \cdot N^{sh}_{symb} - N^{PRB}_{DMRS} - N^{PRB}_{oh}$ , where $N^{RB}_{sc}$ is a quantity of subcarriers included in one PRB in frequency domain, $N^{sh}_{symb}$ is a quantity of symbols included in the second time-frequency resource, $N^{PRB}_{DMRS}$ is DMRS overheads included in the second time-frequency resource, and $N^{PRB}_{oh}$ is higher-layer signaling overheads included in the second time-frequency resource.

It may be understood that in the foregoing manner 2, after obtaining the TBS corresponding to the first TB, the first network device may perform CB segmentation on the first TB based on the TBS corresponding to the first TB.

In a possible implementation, if a sum B of the TBS corresponding to the first TB and a length of a CRC code is less than or equal to the maximum quantity $K_{cb}$ of bits that can be included in one CB, the first network device does not perform CB segmentation on the first TB, where a quantity of CBs is 1. If B is greater than $K_{cb}$, the first network device performs CB segmentation on the first TB, where a quantity C of CBs satisfies the following formula: $C = \lceil B / (K_{cb} - L) \rceil$, where L is the length of the CRC code.

S602: The terminal device obtains the TBS corresponding to the first data, and performs CB segmentation on the TB.

It may be understood that the terminal device may obtain the TBS corresponding to the first data by using a method similar to the method used by the first network device, and perform CB segmentation based on the TBS. Therefore, for a specific process of S602, refer to corresponding descriptions in S601. Details are not described herein again.

It may be understood that, after S602, the terminal device may map bits to different CBs, and perform channel coding on each CB.

Based on the method described in FIG. 6, the terminal device may obtain the TBS corresponding to the first data, and perform CB segmentation on the TB. In this way, the terminal device may map bits to different CBs, perform channel coding on each CB, and then send the first data.

The actions of the first network device or the terminal device in S601 and S602 may be performed by the processor 401 in the communication apparatus 40 shown in FIG. 4 by invoking the application program code stored in the memory 403. This is not limited in this embodiment of this application.

The foregoing mainly describes the solutions provided in embodiments of this application from a perspective of interaction between the network elements. It may be understood that, to implement the foregoing functions, the first network device or the terminal device includes a corresponding hardware structure and/or a corresponding software module for performing each function. A person skilled in the art should easily be aware that with reference to the units and algorithm operations in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first network device or the terminal device may be divided into functional modules based on the foregoing method examples. For example, different functional modules may be obtained through division based on corresponding functions; or two or more functions may be integrated into one processing module. The integrated module may be implemented in a form of hardware, or may be implemented in a form of a software functional module. It should be noted that the module division in embodiments of this application is merely an example, and is merely logical functional division. During actual implementations, there may be other division manners.

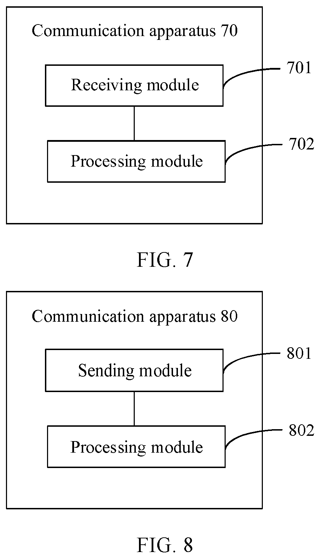

For example, when functional modules are obtained through division in an integrated manner, FIG. 7 is a schematic structural diagram of a communication apparatus 70. The communication apparatus 70 includes a receiving module 701 and a processing module 702.

For example, the communication apparatus 70 is configured to implement a function of a terminal device. For example, the communication apparatus 70 may be the terminal device in the embodiment shown in FIG. 5 or the embodiment shown in FIG. 6.

In an embodiment of this application, the communication apparatus 70 may be a terminal device, or a chip used for the terminal device, or another combined part, component, or the like having a function of the foregoing terminal device. When the communication apparatus 70 is the terminal device, the receiving module 701 may be a receiver, where the receiver may include an antenna, a radio frequency circuit, and the like; and the processing module 702 may be a processor (or a processing circuit), for example, a baseband processor, where the baseband processor may include one or more CPUs. When the communication apparatus 70 is the component having the function of the foregoing terminal device, the receiving module 701 may be a radio frequency unit; and the processing module 702 may be a processor (or a processing circuit), for example, a baseband processor. When the communication apparatus 70 is a chip system, the receiving module 701 may be an input interface of a chip (for example, a baseband chip); and the processing module 702 may be a processor (or a processing circuit) of the chip system, and may include one or more central processing units. It should be understood that the receiving module 701 in this embodiment of this application may be implemented by a receiver or a receiver-related circuit component, and the processing module 702 may be implemented by a processor or a processor-related circuit component (also referred to as a processing circuit).

For example, the receiving module 701 may be configured to perform all receiving operations performed by the terminal device in the embodiment shown in FIG. 5, for example, S501 and S502, and/or configured to support other processes of the technology described in this specification. The processing module 702 may be configured to perform all operations performed by the terminal device except the receiving operations in the embodiment shown in FIG. 5, for example, S503, and/or configured to support other processes of the technology described in this specification.

For another example, the receiving module 701 may be configured to perform all receiving operations performed by the terminal device in the embodiment shown in FIG. 6, for example, S501 and S502, and/or configured to support other processes of the technology described in this specification. The processing module 702 may be configured to perform all operations performed by the terminal device except the receiving operations in the embodiment shown in FIG. 6, for example, S601, S602 and S503, and/or configured to support other processes of the technology described in this specification.

The receiving module 701 is configured to receive first information from a first network device, where the first information is used by the communication apparatus 70 to determine to divide first data into at least two data blocks, the first data is to-be-transmitted data between the first network device and the communication apparatus 70, a quantity of slots occupied by the first data is greater than 1, and each of the at least two data blocks is mapped to a different time-domain position.

The receiving module 701 is further configured to receive second information from the first network device, where the second information indicates at least two MCSs for transmitting the at least two data blocks, and the at least two MCSs are not all the same.

The processing module 702 is configured to transmit the first data to the first network device based on the first information and the second information.

In a possible implementation, the processing module 702 is further configured to obtain a TBS corresponding to the first data, and perform CB segmentation on a TB.

In a possible implementation, each of the at least two data blocks includes at least one CB, each data block includes a different CB, and the at least two data blocks are included in one TB. Alternatively, each of the at least two data blocks includes at least one TB, and each data block includes a different TB.

In a possible implementation, the at least two data blocks are obtained through division in a unit of a slot. Alternatively, the at least two data blocks are obtained through division in a unit of a symbol in a slot.

According to the claimed embodiment, the first information includes information about a frame structure of a second network device, and transmission of the first data is interfered by data transmitted by the second network device. Alternatively, the first information includes first indication information and second indication information, the first indication information indicates a manner of dividing the first data, and the second indication information indicates a boundary between two adjacent data blocks in the first data.

In a possible implementation, the TBS corresponding to the first data is obtained based on a quantity $N_{\inf o}$ of bits of information that can be transmitted on a time-domain resource of a time-domain position corresponding to the first data and a frequency-domain resource of a frequency-domain position corresponding to the first data, where $N_{\inf o}$ satisfies the following formula:

$$N_{\inf o} = \sum_{m=1}^{M} N_{\inf o}(m)$$

, where $N_{\inf o}(m)$ is a quantity of bits of information that can be transmitted on a first time-frequency resource, the first time-frequency resource includes a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks.

In a possible implementation, $N_{\inf o}(m)$ satisfies the following formula: $N_{\inf o}(m) = N_{RE}(m) \cdot R_m \cdot Q_m \cdot v$, where $N_{RE}(m)$ is a quantity of REs in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data.

In a possible implementation, $N_{RE}(m)$ satisfies the following formula: $N_{RE}(m) = N'_{RE}(m) \bullet n_{PRB}$, where $N'_{RE}(m)$ is a quantity of REs in a PRB corresponding to the first time-frequency resource, and $n_{PRB}$ is a quantity of PRBs corresponding to the first time-frequency resource.

In a possible implementation, $N'_{RE}(m)$ satisfies the following formula:

$$N'_{RE}(m) = N_{sc}^{RB} \bullet N_{symb}^{sh}(m) - N_{DMRS}^{PRB}(m) - N_{oh}^{PRB}$$

, where $N_{sc}^{RB}$ is a quantity of subcarriers included in one PRB in frequency domain, $N_{symb}^{sh}(m)$ is a quantity of symbols included in the first time-frequency resource, $N_{DMRS}^{PRB}(m)$ is DMRS overheads included in the first time-frequency resource, and $N_{oh}^{PRB}$ is higher-layer signaling overheads included in the first time-frequency resource.

In a possible implementation, a quantity of CBs included in the first data block satisfies the following formula: $C_m = \lceil B_m / (K_{cb} - L) \rceil$, where $K_{cb}$ is a maximum quantity of bits that can be included in one CB, L is a CRC length, and $B_m$ is a quantity of bits of the first data block.

In a possible implementation, if the first data block is a last data block in the at least two data blocks, $B_m$ satisfies the following formula:

$$B_M = B - \sum_{m=1}^{M-1} N_{\inf o}(m)$$

; or if the first data block is not a last data block in the at least two data blocks, $B_m$ satisfies the following formula: $B_M = N_{\inf o}(m)$, where $B$ is a sum of the TBS corresponding to the first data and a length of a CRC code.

In a possible implementation, a TBS corresponding to a first TB is obtained based on a quantity $N_{\inf o}$ of bits of information that can be transmitted on a time-domain resource of a time-domain position corresponding to the first TB and a frequency-domain resource of a frequency-domain position corresponding to the first TB. The first TB is any TB in the first data. $N_{\inf o}$ satisfies the following formula: $N_{info} = N_{RE} \cdot R_m \cdot Q_m \cdot v$, where $N_{RE}$ is a quantity of REs in a second time-frequency resource that are for transmitting the first TB, the second time-frequency resource includes the time-domain resource of the time-domain position corresponding to the first TB and the frequency-domain resource of the frequency-domain position corresponding to the first TB, $R_m$ is a bit rate corresponding to the second time-frequency resource, $Q_m$ is a modulation scheme corresponding to the second time-frequency resource, and $v$ is a quantity of layers or streams for transmitting the first data.

In a possible implementation, $N_{RE}(m)$ satisfies the following formula: $N_{RE} = N''_{RE} \bullet n_{PRB}$, where $N''_{RE}$ is a quantity of REs in a PRB corresponding to the second time-frequency resource, and $n_{PRB}$ is a quantity of PRBs corresponding to the second time-frequency resource.

In a possible implementation, $N''_{RE}$ satisfies the following formula:

$$N''_{RE} = N_{sc}^{RB} \bullet N_{symb}^{sh} - N_{DMRS}^{PRB} - N_{oh}^{PRB}$$

, where $N_{sc}^{RB}$ is a quantity of subcarriers included in one PRB in frequency domain, $N_{symb}^{sh}$ is a quantity of symbols included in the second time-frequency resource, $N_{DMRS}^{PRB}$ is DMRS overheads included in the second time-frequency resource, and $N_{oh}^{PRB}$ is higher-layer signaling overheads included in the second time-frequency resource.

In a possible implementation, if a sum of the TBS corresponding to the first TB and a length of a CRC code is less than or equal to the maximum quantity of bits that can be included in one CB, CB segmentation is not performed on the first TB; or if a sum of the TBS corresponding to the first TB and a length of a CRC code is greater than the maximum quantity of bits that can be included in one CB, CB segmentation is performed on the first TB.

When the communication apparatus 70 is configured to implement the function of the terminal device, for another function that can be implemented by the communication apparatus 70, refer to related descriptions in the embodiment shown in FIG. 5 or the embodiment shown in FIG. 6. Details are not described again herein.

In a simple embodiment, a person skilled in the art may figure out that the communication apparatus 70 may be in the form shown in FIG. 4. For example, the processor 401 in FIG. 4 may invoke the computer-executable instructions stored in the memory 403, to enable the communication apparatus 70 to perform the method in the foregoing method embodiment.

For example, the functions/implementation processes of the receiving module 701 and the processing module 702 in FIG. 4 may be implemented by the processor 401 in FIG. 4 by invoking the computer-executable instructions stored in the memory 403. Alternatively, the function/implementation process of the processing module 702 in FIG. 7 may be implemented by the processor 401 in FIG. 4 by invoking the computer-executable instructions stored in the memory 403, and the function/implementation process of the receiving module 701 in FIG. 4 may be implemented by using the communication interface 404 in FIG. 4.

For example, when functional modules are obtained through division in an integrated manner, FIG. 8 is a schematic structural diagram of a communication apparatus 80. The communication apparatus 80 includes a sending module 801 and a processing module 802.

For example, the communication apparatus 80 is configured to implement a function of a first network device. For example, the communication apparatus 80 may be the first network device in the embodiment shown in FIG. 5 or the embodiment shown in FIG. 6.

In an embodiment of this application, the communication apparatus 80 may be a first network device, or may be a chip used for the first network device, or another combined part, component, or the like having a function of the foregoing first network device. When the communication apparatus 80 is the first network device, the sending module 801 may be a transmitter, where the transmitter may include an antenna, a radio frequency circuit, and the like; and the processing module 802 may be a processor (or a processing circuit), for example, a baseband processor, where the baseband processor may include one or more CPUs. When the communication apparatus 80 is the component having the function of the first network device, the sending module 801 may be a radio frequency unit; and the processing module 802 may be a processor (or a processing circuit), for example, a baseband processor. When the communication apparatus 80 is a chip system, the sending module 801 may be an output interface of a chip (for example, a baseband chip); and the processing module 802 may be a processor (or a processing circuit) of the chip system, and may include one or more central processing units. It should be understood that the sending module 801 in this embodiment of this application may be implemented by a transmitter or a transmitter-related circuit component, and the processing module 802 may be implemented by a processor or a processor-related circuit component (also referred to as a processing circuit).

For example, the sending module 801 may be configured to perform all sending operations performed by the first network device in the embodiment shown in FIG. 5, for example, S501 and S502, and/or configured to support other processes of the technology described in this specification. The processing module 802 may be configured to perform all operations performed by the first network device except the sending operations in the embodiment shown in FIG. 5, for example, S503, and/or configured to support other processes of the technology described in this specification.

For another example, the sending module 801 may be configured to perform all sending operations performed by the first network device in the embodiment shown in FIG. 6, for example, S501 and S502, and/or configured to support other processes of the technology described in this specification. The processing module 802 may be configured to perform all operations performed by the first network device except the sending operations in the embodiment shown in FIG. 6, for example, S601, S602, and S503, and/or configured to support other processes of the technology described in this specification.

The sending module 801 is configured to send first information to a terminal device, where the first information is used by the terminal device to determine to divide first data into at least two data blocks, the first data is to-be-transmitted data between the communication apparatus 80 and the terminal device, a quantity of slots occupied by the first data is greater than 1, and each of the at least two data blocks is mapped to a different time-domain position.

The sending module 801 is further configured to send second information to the terminal device, where the second information indicates at least two MCSs for transmitting the at least two data blocks, and the at least two MCSs are not all the same.

The processing module 802 is configured to transmit the first data to the terminal device based on the first information and the second information.

In a possible implementation, the processing module 802 is further configured to obtain a TBS corresponding to the first data, and perform CB segmentation on a TB.

In a possible implementation, each of the at least two data blocks includes at least one CB, each data block includes a different CB, and the at least two data blocks are included in one TB. Alternatively, each of the at least two data blocks includes at least one TB, and each data block includes a different TB.

In a possible implementation, the at least two data blocks are obtained through division in a unit of a slot. Alternatively, the at least two data blocks are obtained through division in a unit of a symbol in a slot.

According to the claimed embodiment, the first information includes information about a frame structure of a second network device, and transmission of the first data is interfered by data transmitted by the second network device; or the first information includes first indication information and second indication information, the first indication information indicates a manner of dividing the first data, and the second indication information indicates a boundary between two adjacent data blocks in the first data.

In a possible implementation, the TBS corresponding to the first data is obtained based on a quantity $N_{\inf o}$ of bits of information that can be transmitted on a time-domain resource of a time-domain position corresponding to the first data and a frequency-domain resource of a frequency-domain position corresponding to the first data, where $N_{\inf o}$ satisfies the following formula:

$$N_{\inf o} = \sum_{m=1}^{M} N_{\inf o}(m)$$

, where $N_{\inf o}(m)$ is a quantity of bits of information that can be transmitted on a first time-frequency resource, the first time-frequency resource includes a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks.

In a possible implementation, $N_{\inf o}(m)$ satisfies the following formula: $N_{\inf o}(m) = N_{RE}(m) \cdot R_m \cdot Q_m \cdot v$, where $N_{RE}(m)$ is a quantity of REs in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data.

In a possible implementation, $N_{RE}(m)$ satisfies the following formula: $N_{RE}(m) = N'_{RE}(m) \bullet n_{PRB}$, where $N'_{RE}(m)$ is a quantity of REs in a PRB corresponding to the first time-frequency resource, and $n_{PRB}$ is a quantity of PRBs corresponding to the first time-frequency resource.

In a possible implementation, $N'_{RE}(m)$ satisfies the following formula:

$$N'_{RE}(m) = N_{sc}^{RB} \bullet N_{symb}^{sh}(m) - N_{DMRS}^{PRB}(m) - N_{oh}^{PRB}$$

, where $N_{sc}^{RB}$ is a quantity of subcarriers included in one PRB in frequency domain, $N_{symb}^{sh}(m)$ is a quantity of symbols included in the first time-frequency resource, $N_{DMRS}^{PRB}(m)$ is DMRS overheads included in the first time-frequency resource, and $N_{oh}^{PRB}$ is higher-layer signaling overheads included in the first time-frequency resource.

In a possible implementation, a quantity of CBs included in the first data block satisfies the following formula: $C_m = \lceil B_m / (K_{cb} - L) \rceil$, where $K_{cb}$ is a maximum quantity of bits that can be included in one CB, $L$ is a cyclic redundancy check CRC length, and $B_m$ is a quantity of bits of the first data block.

In a possible implementation, if the first data block is a last data block in the at least two data blocks, $B_m$ satisfies the following formula:

$$B_M = B - \sum_{m=1}^{M-1} N_{\inf o}(m)$$

; or if the first data block is not a last data block in the at least two data blocks, $B_m$ satisfies the following formula: $B_M = N_{\inf o}(m)$, where $B$ is a sum of the TBS corresponding to the first data and a length of a CRC code.

In a possible implementation, a TBS corresponding to the first TB is obtained based on a quantity $N_{\inf o}$ of bits of information that can be transmitted on a time-domain resource of a time-domain position corresponding to the first TB and a frequency-domain resource of a frequency-domain position corresponding to the first TB. The first TB is any TB in the first data. $N_{\inf o}$ satisfies the following formula: $N_{\inf o} = N_{RE} \cdot R_m \cdot Q_m \cdot v$, where $N_{RE}$ is a quantity of REs in a second time-frequency resource that are for transmitting the first TB, the second time-frequency resource includes the time-domain resource of the time-domain position corresponding to the first TB and the frequency-domain resource of the frequency-domain position corresponding to the first TB, $R_m$ is a bit rate corresponding to the second time-frequency resource, $Q_m$ is a modulation scheme corresponding to the second time-frequency resource, and $v$ is a quantity of layers or streams for transmitting the first data.

In a possible implementation, $N_{RE}(m)$ satisfies the following formula: $N_{RE} = N''_{RE} \bullet n_{PRB}$, where $N''_{RE}$ is a quantity of REs in a PRB corresponding to the second time-frequency resource, and $n_{PRB}$ is a quantity of PRBs corresponding to the second time-frequency resource.

In a possible implementation, $N''_{RE}$ satisfies the following formula:

$$N''_{RE} = N_{sc}^{RB} \bullet N_{symb}^{sh} - N_{DMRS}^{PRB} - N_{oh}^{PRB}$$

, where $N_{sc}^{RB}$ is a quantity of subcarriers included in one PRB in frequency domain, $N_{symb}^{sh}$ is a quantity of symbols included in the second time-frequency resource, $N_{DMRS}^{PRB}$ is DMRS overheads included in the second time-frequency resource, and $N_{oh}^{PRB}$ is higher-layer signaling overheads included in the second time-frequency resource.

In a possible implementation, if a sum of the TBS corresponding to the first TB and a length of a CRC code is less than or equal to the maximum quantity of bits that can be included in one CB, CB segmentation is not performed on the first TB; or if a sum of the TBS corresponding to the first TB and a length of a CRC code is greater than the maximum quantity of bits that can be included in one CB, CB segmentation is performed on the first TB.

When the communication apparatus 80 is configured to implement the function of the first network device, for another function that can be implemented by the communication apparatus 80, refer to related descriptions in the embodiment shown in FIG. 5 or the embodiment shown in FIG. 6. Details are not described again herein.

In a simple embodiment, a person skilled in the art may figure out that the communication apparatus 80 may be in the form shown in FIG. 4. For example, the processor 401 in FIG. 4 may invoke the computer-executable instructions stored in the memory 403, to enable the communication apparatus 80 to perform the method in the foregoing method embodiment.

For example, the functions/implementation processes of the sending module 801 and the processing module 802 in FIG. 4 may be implemented by the processor 401 in FIG. 4 by invoking the computer-executable instructions stored in the memory 403. Alternatively, the function/implementation process of the processing module 802 in FIG. 8 may be implemented by the processor 401 in FIG. 4 by invoking the computer-executable instructions stored in the memory 403, and the function/implementation process of the sending module 801 in FIG. 4 may be implemented by using the communication interface 404 in FIG. 4.

Based on the foregoing descriptions about the implementations, a person skilled in the art can clearly understand that, for convenience and conciseness of description, division of the foregoing functional modules is used as an example for description. During actual application, the foregoing functions may be allocated to different functional modules for completion as required. In other words, an internal structure of the apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the module or unit division is merely logical function division and there may be another division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments in this application essentially, or the part contributing to a conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1. A data transmission method, wherein the method comprises:

receiving, by a terminal device, first information from a first network device, wherein the first information is used by the terminal device to determine to divide first data into at least two data blocks, the first data is to-be-transmitted data between the first network device and the terminal device, a quantity of slots occupied by the first data is greater than 1, and each of the at least two data blocks is mapped to a different time-domain position;
receiving, by the terminal device, second information from the first network device, wherein the second information indicates at least two modulation and coding schemes, MCSs for transmitting the at least two data blocks, each of the at least two data blocks corresponding to a respective one of the at least two MCSs, and the at least two MCSs are not all the same; and
transmitting, by the terminal device, the first data using the at least two data blocks and their corresponding MCSs, to the first network device based on the first information and the second information;
**characterised in that**
the first information comprises information about a frame structure of a second network device, and transmission of the first data is interfered by data transmitted by the second network device.

2. The method according to claim 1, wherein the method further comprises:
obtaining, by the terminal device, a transport block size, TBS corresponding to the first data, and performing code block, CB, segmentation on a transport block TB.

3. The method according to any one of claims 1 to 2, wherein

each of the at least two data blocks comprises at least one CB, each data block comprises a different CB, and the at least two data blocks are comprised in one TB; or
each of the at least two data blocks comprises at least one TB, and each data block comprises a different TB.

4. The method according to claim 3, wherein

the at least two data blocks are obtained through division in a unit of a slot; or
the at least two data blocks are obtained through division in a unit of a symbol in a slot.

5. The method according to claim 2, wherein the TBS corresponding to the first data is obtained based on a quantity $N_{\text{inf } o}$ of bits of information that can be transmitted on a time-domain resource of a time-domain position corresponding to the first data and a frequency-domain resource of a frequency-domain position corresponding to the first data, wherein $N_{\text{inf } o}$ satisfies the following formula:

$$N_{\text{inf} o} = \sum_{m=1}^{M} N_{\text{inf} o}(m)$$, wherein $N_{\text{inf } o}(m)$ is a quantity of bits of information that can be transmitted on a first time-frequency resource, the first time-frequency resource comprises a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks.

6. The method according to claim 5, wherein $N_{\text{inf } o}(m)$ satisfies the following formula: $N_{\text{inf } o}(m) = N_{RE}(m) \cdot R_m \cdot Q_m \cdot v$, wherein $N_{RE}(m)$ is a quantity of resource elements REs in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data.

7. A data transmission method, wherein the method comprises:

sending, by a first network device, first information to a terminal device, wherein the first information is used by the terminal device to determine to divide first data into at least two data blocks, the first data is to-be-transmitted data between the first network device and the terminal device, a quantity of slots occupied by the first data is greater than 1, and each of the at least two data blocks is mapped to a different time-domain position;
sending, by the first network device, second information to the terminal device, wherein the second information indicates at least two modulation and coding schemes MCSs for transmitting the at least two data blocks, each of the at least two data blocks corresponding to a respective one of the at least two MCSs, and the at least two MCSs are not all the same;
and transmitting, by the first network device, the first data using the at least two data blocks and their corresponding MCSs, to the terminal device based on the first information and the second information;
**characterised in that**
the first information comprises information about a frame structure of a second network device, and transmission of the first data is interfered by data transmitted by the second network device.

8. The method according to claim 7, wherein the method further comprises:
obtaining, by the first network device, a transport block size TBS corresponding to the first data, and performing code block CB segmentation on a transport block TB.

9. The method according to any one of claims 7 to 8, wherein

each of the at least two data blocks comprises at least one CB, each data block comprises a different CB, and the at least two data blocks are comprised in one TB; or
each of the at least two data blocks comprises at least one TB, and each data block comprises a different TB.

10. The method according to claim 9, wherein

the at least two data blocks are obtained through division in a unit of a slot; or
the at least two data blocks are obtained through division in a unit of a symbol in a slot.

11. The method according to claim 8, wherein the TBS corresponding to the first data is obtained based on a quantity $N_{\text{inf } o}$ of bits of information that can be transmitted on a time-domain resource of a time-domain position corresponding to the first data and a frequency-domain resource of a frequency-domain position corresponding to the first data, wherein $N_{\text{inf } o}$ satisfies the following formula:

$$N_{\text{inf} o} = \sum_{m=1}^{M} N_{\text{inf} o}(m)$$ , wherein $N_{\text{inf } o}(m)$ is a quantity of bits of information that can be transmitted on a first time-frequency resource, the first time-frequency resource comprises a time-domain resource of a time-domain position corresponding to a first data block and a frequency-domain resource of a frequency-domain position corresponding to the first data block, the first data block is any one of the at least two data blocks, M is a quantity of the at least two data blocks, and m is an index of the first data block in the at least two data blocks.

12. The method according to claim 11, wherein $N_{\text{inf} o}(m)$ satisfies the following formula: $N_{\text{inf} o}(m) = N_{RE}(m) \cdot R_m \cdot Q_m \cdot v$, wherein $N_{RE}(m)$ is a quantity of resource elements REs in the first time-frequency resource that are for transmitting the first data block, $R_m$ is a bit rate corresponding to the first time-frequency resource, $Q_m$ is a modulation scheme corresponding to the first time-frequency resource, and $v$ is a quantity of layers or streams for transmitting the first data.

13. A communication apparatus, configured to perform the method according to any one of claims 1 to 6, or any one of claims 7 to 12.

**Patentansprüche**

1. Datenübertragungsverfahren, wobei das Verfahren Folgendes umfasst:

Empfangen von ersten Informationen von einer ersten Netzwerkvorrichtung durch eine Endgerätevorrichtung, wobei die Endgerätevorrichtung die ersten Informationen verwendet, um zu bestimmen, erste Daten in mindestens zwei Datenblöcke aufzuteilen, wobei die ersten Daten zwischen der ersten Netzwerkvorrichtung und der Endgerätevorrichtung zu übertragende Daten sind, eine Anzahl der von den ersten Daten belegten Schlitze größer als 1 ist und jeder der mindestens zwei Datenblöcke einer anderen Zeitbereichsposition zugeordnet ist;
Empfangen von zweiten Informationen von der ersten Netzwerkvorrichtung durch die Endgerätevorrichtung, wobei die zweiten Informationen mindestens zwei Modulations- und Codierungsschemata (MCS) zum Übertragen der mindestens zwei Datenblöcke angeben, wobei jeder der mindestens zwei Datenblöcke jeweils einem der mindestens zwei MCS entspricht und die mindestens zwei MCS nicht alle identisch sind; und
Übertragen der ersten Daten durch die Endgerätevorrichtung unter Verwendung der mindestens zwei Datenblöcke und ihrer entsprechenden MCS an die erste Netzwerkvorrichtung auf Grundlage der ersten und der zweiten Informationen;
**dadurch gekennzeichnet, dass**
die ersten Informationen Informationen über einer Rahmenstruktur einer zweiten Netzwerkvorrichtung umfassen und die Übertragung der ersten Daten durch Daten, die von der zweiten Netzwerkvorrichtung übertragen werden, gestört wird.

2. Verfahren nach Anspruch 1, wobei das Verfahren ferner Folgendes umfasst:
Erlangen einer Transportblockgröße (TBS - Transport Block Size) durch die Endgerätevorrichtung entsprechend den ersten Daten und Durchführen einer Codeblock (CB)-Segmentierung auf einem Transportblock (TB).

3. Verfahren nach einem der Ansprüche 1 bis 2, wobei jeder der mindestens zwei Datenblöcke mindestens einen CB umfasst, jeder Datenblock einen anderen CB umfasst und die mindestens zwei Datenblöcke in einem TB umfasst sind; oder jeder der mindestens zwei Datenblöcke mindestens einen TB umfasst und jeder Datenblock einen anderen TB umfasst.

4. Verfahren nach Anspruch 3, wobei

die mindestens zwei Datenblöcke durch Teilen in einer Einheit aus einem Schlitz erlangt werden; oder
die mindestens zwei Datenblöcke durch Teilen in einer Einheit aus einem Symbol in einem Schlitz erlangt werden.

5. Verfahren nach Anspruch 2, wobei die den ersten Daten entsprechende TBS auf Grundlage einer Anzahl $N_{inf\,o}$ von Bits an Informationen erlangt wird, die auf einer Zeitbereichsressource einer den ersten Daten entsprechenden Zeitbereichsposition und einer Frequenzbereichsressource einer den ersten Daten entsprechenden Frequenzbereichsposition übertragen werden können, wobei $N_{inf\,o}$ die folgende Formel erfüllt:

$$N_{inf\,o} = \sum_{m=1}^{M} N_{inf\,o}(m)$$ wobei $N_{inf\,o}$ *(m)* eine

Anzahl von Bits an Informationen ist, die auf einer ersten Zeit-Frequenz-Ressource übertragen werden können, die erste Zeit-Frequenz-Ressource eine Zeitbereichsressource einer Zeitbereichsposition, die einem ersten Datenblock entspricht, und eine Frequenzbereichsressource einer Frequenzbereichsposition, die dem ersten Datenblock entspricht, umfasst, der erste Datenblock ein beliebiger der mindestens zwei Datenblöcke ist, M eine Anzahl der mindestens zwei Datenblöcke ist und m ein Index des ersten Datenblocks der mindestens zwei Datenblöcke ist.

6. Verfahren nach Anspruch 5, wobei $N_{inf\,o}$ (m) die folgende Formel erfüllt: $N_{inf\,o}(m) = N_{RE}(m) \cdot R_m \cdot Q_m \cdot v,$ wobei $N_{RE}$ *(m)* eine Anzahl der Ressourcenelemente (RE) in der ersten Zeit-Frequenz-Ressource ist, die zum Übertragen des ersten Datenblocks dienen, $R_m$ eine Bitrate ist, die der ersten Zeit-Frequenz-Ressource entspricht, $Q_m$ ein Modulationsschema ist, das der ersten Zeit-Frequenz-Ressource entspricht, und v eine Anzahl der Schichten oder Ströme zum Übertragen der ersten Daten ist.

7. Datenübertragungsverfahren, wobei das Verfahren Folgendes umfasst:

Senden von ersten Informationen durch eine erste Netzwerkvorrichtung an eine Endgerätevorrichtung, wobei die Endgerätevorrichtung die ersten Informationen verwendet, um zu bestimmen, erste Daten in mindestens zwei Datenblöcke aufzuteilen, wobei die ersten Daten zwischen der ersten Netzwerkvorrichtung und der Endgerätevorrichtung zu übertragende Daten sind, eine Anzahl der von den ersten Daten belegten Schlitze größer als 1 ist und jeder der mindestens zwei Datenblöcke einer anderen Zeitbereichsposition zugeordnet ist;
Senden von zweiten Informationen durch die erste Netzwerkvorrichtung an die Endgerätevorrichtung, wobei die zweiten Informationen mindestens zwei Modulations- und Codierungsschemata (MCS) zum Übertragen der mindestens zwei Datenblöcke angeben, wobei jeder der mindestens zwei Datenblöcke jeweils einem der mindestens zwei MCS entspricht und die mindestens zwei MCS nicht alle identisch sind; und Übertragen der ersten Daten durch die erste Netzwerkvorrichtung unter Verwendung der mindestens zwei Datenblöcke und ihrer entsprechenden MCS an die Endgerätevorrichtung auf Grundlage der ersten und der zweiten Informationen;
**dadurch gekennzeichnet, dass**
die ersten Informationen Informationen über einer Rahmenstruktur einer zweiten Netzwerkvorrichtung umfassen und die Übertragung der ersten Daten durch Daten, die von der zweiten Netzwerkvorrichtung übertragen werden, gestört wird.

8. Verfahren nach Anspruch 7, wobei das Verfahren ferner Folgendes umfasst:
Erlangen einer Transportblockgröße (TBS) durch die erste Netzwerkvorrichtung entsprechend den ersten Daten und Durchführen der Codeblock (CB)-Segmentierung auf einem Transportblock (TB).

9. Verfahren nach einem der Ansprüche 7 bis 8, wobei jeder der mindestens zwei Datenblöcke mindestens einen CB umfasst, jeder Datenblock einen anderen CB umfasst und die mindestens zwei Datenblöcke in einem TB umfasst sind; oder jeder der mindestens zwei Datenblöcke mindestens einen TB umfasst und jeder Datenblock einen anderen TB umfasst.

10. Verfahren nach Anspruch 9, wobei

die mindestens zwei Datenblöcke durch Teilen in einer Einheit aus einem Schlitz erlangt werden; oder
die mindestens zwei Datenblöcke durch Teilen in einer Einheit aus einem Symbol in einem Schlitz erlangt werden.

11. Verfahren nach Anspruch 8, wobei die den ersten Daten entsprechende TBS auf Grundlage einer Anzahl $N_{inf\,o}$ von Bits an Informationen erlangt wird, die auf einer Zeitbereichsressource einer den ersten Daten entsprechenden Zeitbereichsposition und einer Frequenzbereichsressource einer den ersten Daten entsprechenden Frequenzbereichsposition übertragen werden können, wobei

$N_{inf\,o}$ die folgende Formel erfüllt: $N_{inf\,o} = \sum_{m=1}^{M} N_{inf\,o}(m)$ ,

*(m)* wobei $N_{inf\,o}$ *(m)* eine Anzahl von Bits an Informationen ist, die auf einer ersten Zeit-Frequenz-Ressource übertragen werden können, die erste Zeit-Frequenz-Ressource eine Zeitbereichsressource einer Zeitbereichsposition, die einem ersten Datenblock entspricht, und eine Frequenzbereichsressource einer Frequenzbereichsposition, die dem ersten Datenblock entspricht, umfasst, der erste Datenblock ein beliebiger der mindestens zwei Datenblöcke ist, M eine Anzahl der mindestens zwei Datenblöcke ist und m ein Index des ersten Datenblocks der mindestens zwei Datenblöcke ist.

12. Verfahren nach Anspruch 11, wobei $N_{\inf o}$ *(m)* die folgende Formel erfüllt: $N_{\inf o}(m) = N_{RE}(m) \cdot R_m \cdot Q_m \cdot v$, wobei $N_{RE}$ *(m)* eine Anzahl der Ressourcenelemente (RE) in der ersten Zeit-Frequenz-Ressource ist, die zum Übertragen des ersten Datenblocks dienen, $R_m$ eine Bitrate ist, die der ersten Zeit-Frequenz-Ressource entspricht, $Q_m$ ein Modulationsschema ist, das der ersten Zeit-Frequenz-Ressource entspricht, und v eine Anzahl der Schichten oder Ströme zum Übertragen der ersten Daten ist.

13. Kommunikationsvorrichtung, die dazu konfiguriert ist, das Verfahren nach einem der Ansprüche 1 bis 6 oder einem der Ansprüche 7 bis 12 durchzuführen.

**Revendications**

1. Procédé de transmission de données, dans lequel le procédé comprend :

la réception, par un dispositif terminal, de premières informations à partir d'un premier dispositif réseau, dans lequel les premières informations sont utilisées par le dispositif terminal pour déterminer de diviser des premières données en au moins deux blocs de données, les premières données sont des données à transmettre entre le premier dispositif réseau et le dispositif terminal, une quantité d'emplacements occupés par les premières données est supérieur à 1, et chacun des au moins deux blocs de données sont mappés à une position de domaine temporel différente ;
la réception, par le dispositif terminal, de secondes informations à partir du premier dispositif réseau, dans lequel les secondes informations indiquent au moins deux schémas de modulation et de codage, MCS pour la transmission des au moins deux blocs de données, chacun des au moins deux blocs de données correspondant à l'un des au moins deux MCS, et les au moins deux MCS ne sont pas tous identiques ; et
la transmission, par le dispositif terminal, des premières données à l'aide des au moins deux blocs de données et leurs MCS correspondants, au premier dispositif réseau sur la base des premières informations et des secondes informations ;
**caractérisé en ce que**
les premières informations comprennent des informations sur une structure de trame d'un second dispositif réseau, et la transmission des premières données est perturbée par des données transmises par le second dispositif réseau.

2. Procédé selon la revendication 1, dans lequel le procédé comprend également :
l'obtention, par le dispositif terminal, d'une taille de bloc de transport, TBS correspondant aux premières données, et la réalisation d'une segmentation de bloc de code, CB, sur un bloc de transport TB.

3. Procédé selon l'une quelconque des revendications 1 et 2, dans lequel

chacun des au moins deux blocs de données comprend au moins un CB, chaque bloc de données comprend un CB différent, et les au moins deux blocs de données sont compris dans un TB ; ou
chacun des au moins deux blocs de données comprend au moins un TB, et chaque bloc de données comprend un TB différent.

4. Procédé selon la revendication 3, dans lequel

les au moins deux blocs de données sont obtenus par division dans une unité d'un emplacement ; ou
les au moins deux blocs de données sont obtenus par division dans une unité d'un symbole dans un emplacement.

5. Procédé selon la revendication 2, dans lequel la TBS correspondant aux premières données est obtenu sur la base d'une quantité $N_{\inf o}$ de bits d'information qui peuvent être transmis sur une ressource temporelle d'une position de domaine temporel correspondant aux premières données et sur une ressource fréquentielle d'une position de domaine fréquentiel correspondant aux premières données, dans lequel $N_{\inf o}$ satisfait la formule suivante :

$$N_{\inf o} = \sum_{m=1}^{M} N_{\inf o}(m)$$, où $N_{\inf o}$ *(m)* est une

quantité de bits d'information qui peuvent être transmis sur une première ressource temps-fréquence, la première ressource temps-fréquence comprend une ressource de domaine temporel d'une position de domaine temporel correspondant à un premier bloc de données et une ressource de domaine fréquentiel d'une position de domaine fréquentiel correspondant au premier bloc de données, le premier bloc de données est l'un quelconque des au moins deux

blocs de données, M est une quantité des au moins deux blocs de données, et m est un indice du premier bloc de données dans les au moins deux blocs de données.

**6.** Procédé selon la revendication 5, dans lequel $N_{info}$ (m) satisfait la formule suivante : $N_{info}(m) = N_{RE}(m) \cdot R_m \cdot Q_m \cdot v$, où $N_{RE}$ *(m)* est une quantité d'éléments de ressource RE dans la première ressource temps-fréquence qui sont destinés à transmettre le premier bloc de données, $R_m$ est un débit binaire correspondant à la première ressource temps-fréquence, $Q_m$ est un schéma de modulation correspondant à la première ressource temps-fréquence, et v est une quantité de couches ou de flux pour transmettre les premières données.

**7.** Procédé de transmission de données, dans lequel le procédé comprend :

l'envoi, par un premier dispositif réseau, de premières informations à un dispositif terminal, dans lequel les premières informations sont utilisées par le dispositif terminal pour déterminer de diviser des premières données en au moins deux blocs de données, les premières données sont des données à transmettre entre le premier dispositif réseau et le dispositif terminal, un nombre d'emplacements occupés par les premières données est supérieur à 1, et chacun des au moins deux blocs de données sont mappés à une position de domaine temporel différente ;
l'envoi, par le premier dispositif réseau, de secondes informations au dispositif terminal, dans lequel les secondes informations indiquent au moins deux schémas de modulation et de codage MCS destinés à transmettre les au moins deux blocs de données, chacun des au moins deux blocs de données correspondant à l'un respectif des au moins deux MCS, et les au moins deux MCS ne sont pas tous identiques ;
et la transmission, par le premier dispositif réseau, des premières données à l'aide des au moins deux blocs de données et leurs MCS correspondants, au dispositif terminal sur la base des premières informations et des secondes informations ;
**caractérisé en ce que**
les premières informations comprennent des informations sur une structure de trame d'un second dispositif réseau, et la transmission des premières données est perturbée par des données transmises par le second dispositif réseau.

**8.** Procédé selon la revendication 7, dans lequel le procédé comprend également :
l'obtention, par le premier dispositif terminal, d'une taille de bloc de transport TBS correspondant aux premières données, et la réalisation d'une segmentation de bloc de code CB sur un bloc de transport TB.

**9.** Procédé selon l'une quelconque des revendications 7 et 8, dans lequel
chacun des au moins deux blocs de données comprend au moins un CB, chaque bloc de données comprend un CB différent, et les au moins deux blocs de données sont compris dans un TB ; ou chacun des au moins deux blocs de données comprend au moins un TB, et chaque bloc de données comprend un TB différent.

**10.** Procédé selon la revendication 9, dans lequel

les au moins deux blocs de données sont obtenus par division dans une unité d'un emplacement ; ou
les au moins deux blocs de données sont obtenus par division dans une unité d'un symbole dans un emplacement.

**11.** Procédé selon la revendication 8, dans lequel la TBS correspondant aux premières données est obtenu sur la base d'une quantité $N_{info}$ de bits d'information qui peuvent être transmis sur une ressource de domaine temporel d'une position de domaine temporel correspondant aux premières données et sur une ressource de domaine de fréquence d'une position de domaine fréquentiel correspondant aux premières données, dans lequel
$N_{info}$ satisfait la formule suivante : $N_{info} = \sum_{m=1}^{M} N_{info}(m)$ $(m)$, où $N_{info}$ *(m)* est une quantité de bits d'information qui peuvent être transmis sur une première ressource temps-fréquence, la première ressource temps-fréquence comprend une ressource de domaine temporel d'une position de domaine temporel correspondant à un premier bloc de données et une ressource de domaine fréquentiel d'une position de domaine fréquentiel correspondant au premier bloc de données, le premier bloc de données est l'un quelconque des au moins deux blocs de données, M est une quantité des au moins deux blocs de données, et m est un indice du premier bloc de données dans les au moins deux blocs de données.

**12.** Procédé selon la revendication 11, dans lequel $N_{info}$ (m) satisfait la formule suivante : $N_{info}(m) = N_{RE}(m) \cdot R_m \cdot Q_m \cdot v$, où $N_{RE}$ *(m)* est une quantité d'éléments de ressource RE dans la première ressource temps-fréquence qui sont destinés à transmettre le premier bloc de données, $R_m$ est un débit binaire correspondant à la première ressource temps-fréquence, $Q_m$

est un schéma de modulation correspondant à la première ressource temps-fréquence, et v est une quantité de couches ou de flux pour transmettre les premières données.

13. Appareil de communication, configuré pour réaliser le procédé selon l'une quelconque des revendications 1 à 6, ou l'une quelconque des revendications 7 à 12.

EP 4 274 342 B1

FIG. 1A

Slot 0   Slot 1   Slot 2   Slot 3   Slot 4

Time domain

FIG. 1B

FIG. 2A

FIG. 2B

FIG. 2C

One TB

| | | |
|---|---|---|
| 301 | 302 | 302 |

→

Time domain

## FIG. 3A

| | | |
|---|---|---|
| 304 | 305 | 306 |

→

Time domain

## FIG. 3B

40

```
                        401              407
          ┌─────────────────┐  ┌─────────────────┐              403
          │    Processor    │  │    Processor    │
          │  ┌───────────┐  │  │  ┌───────────┐  │        ┌──────────┐
          │  │   CPU 0   │  │  │  │   CPU 0   │  │        │          │
          │  └───────────┘  │  │  └───────────┘  │        │          │
          │  ┌───────────┐  │  │  ┌───────────┐  │        │          │
          │  │   CPU 1   │  │  │  │   CPU 1   │  │        │          │
          │  └───────────┘  │  │  └───────────┘  │        │  Memory  │
   Communication            │  └─────────────────┘        │          │
      link 402 ─┐           │           │                 │          │
                └───────────┴───────────┴─────────────────┤          │
                   404         405         406             └──────────┘
          ┌─────────────┐ ┌──────────┐ ┌──────────┐
          │Communication│ │  Output  │ │  Input   │
          │  interface  │ │  device  │ │  device  │
          └─────────────┘ └──────────┘ └──────────┘
```

## FIG. 4

```
┌─────────────┐                    ┌─────────────┐
│  Terminal   │                    │First network│
│   device    │                    │   device    │
└──────┬──────┘                    └──────┬──────┘
       │         S501: First information   │
       │◄─────────────────────────────────│
       │                                   │
       │       S502: Second information    │
       │◄─────────────────────────────────│
┌──────┴──────────────────────────────────┐
│ S503: Transmit first data based on the   │
│ first information and the second         │
│ information                              │
└──────┬──────────────────────────────────┘
       │                                   │
```

FIG. 5

```
┌─────────────┐                    ┌─────────────┐
│  Terminal   │                    │First network│
│   device    │                    │   device    │
└──────┬──────┘                    └──────┬──────┘
       │        S501: First information    │
       │◄─────────────────────────────────│
       │          ┌───────────────────────┴─┐
       │          │ Obtain a TBS corresponding to │ ─── S601
       │          │ first data, and perform CB    │
       │          │ segmentation on a TB          │
       │          └───────────────────────┬─┘
       │        S502: Second information   │
       │◄─────────────────────────────────│
┌──────┴────────────────────────────┐     │
│ Obtain the TBS corresponding to the │     │
S602 │ first data, and perform CB      │     │
│ segmentation on the TB              │     │
└──────┬────────────────────────────┘     │
┌──────┴──────────────────────────────────┐
│ S503: Transmit the first data based on the first │
│ information and the second information    │
└──────┬──────────────────────────────────┘
       │                                   │
```

FIG. 6

Communication apparatus 70

Receiving module — 701

Processing module — 702

FIG. 7

Communication apparatus 80

Sending module — 801

Processing module — 802

FIG. 8

## REFERENCES CITED IN THE DESCRIPTION

**Patent documents cited in the description**

- US 2019373486 A1
- US 2020235971 A1

- WO 202019749 A1